(19)

Europäisches
Patentamt
European
Patent Office
Office européen
des brevets

(11) **EP 3 866 539 A1**

(12) **EUROPEAN PATENT APPLICATION**
published in accordance with Art. 153(4) EPC

(43) Date of publication:
**18.08.2021 Bulletin 2021/33**

(21) Application number: **19881338.8**

(22) Date of filing: **08.11.2019**

(51) Int Cl.:
**H04W 72/04** (2009.01)

(86) International application number:
**PCT/CN2019/116442**

(87) International publication number:
**WO 2020/094110 (14.05.2020 Gazette 2020/20)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.11.2018 CN 201811333390**

(71) Applicant: **Huawei Technologies Co., Ltd.
Longgang
Shenzhen, Guangdong 518129 (CN)**

(72) Inventors:
• **CHEN, Zheng**
Shenzhen, Guangdong 518129 (CN)
• **XUE, Lixia**
Shenzhen, Guangdong 518129 (CN)

(74) Representative: **Goddar, Heinz J.
Boehmert & Boehmert
Anwaltspartnerschaft mbB
Pettenkoferstrasse 22
80336 München (DE)**

(54) **SIGNAL RECEIVING METHOD, SIGNAL TRANSMITTING METHOD AND DEVICES THEREOF**

(57) This application provides a signal receiving method, a signal sending method, and an apparatus thereof. The signal receiving method includes: A terminal device determines at least one time-frequency resource; monitors a wake-up signal or a go-to-sleep signal on the at least one time-frequency resource, where the at least one time-frequency resource is further used to carry a downlink control channel; and determines, based on a result of monitoring the wake-up signal or the go-to-sleep signal, whether to start to monitor the downlink control channel from a first time location. According to this method, an existing channel or signal resource is shared, to improve resource utilization efficiency on a network side, thereby flexibly meeting a coverage requirement of the wake-up signal or the go-to-sleep signal, and ensuring transmission reliability of the wake-up signal or the go-to-sleep signal.

EP 3 866 539 A1

1000

Terminal device

Network device

S1010: Determine at least one time-frequency resource

S1020: Send a first signal on the at least one time-frequency resource

S1030: Determine, based on a result of monitoring the first signal, whether to start to monitor a first channel from a first time location

FIG. 10

**Description**

This application claims priority to Chinese Patent Application No. 201811333390.9, filed with the China Patent Office on November 9, 2018 and entitled "SIGNAL RECEIVING METHOD, SIGNAL SENDING METHOD, AND APPARATUS THEREOF", which is incorporated herein by reference in its entirety.

**TECHNICAL FIELD**

This application relates to the communications field, and more specifically, to a signal receiving method, a signal sending method, and an apparatus thereof in the communications field.

**BACKGROUND**

In a new radio (new radio, NR) communications system, a terminal device works on a larger radio frequency and baseband bandwidth, and a discontinuous reception (discontinuous reception, DRX) processing procedure may be configured for the terminal device. If the terminal device is not in an active time (active time) of a DRX cycle, the terminal device may be stopped from monitoring a PDCCH, to reduce power consumption and prolong battery life. In a DRX cycle, the terminal device needs to first wake up from a sleep state, enable a radio frequency and a baseband circuit to obtain time-frequency synchronization, and then start a timer to monitor a PDCCH in an "on duration" time period. These processes cost a lot of power consumption. However, data transmission is usually bursty and sparse in terms of time. If no data scheduling is performed by a base station on the terminal device in the "on duration" time period, unnecessary energy consumption is generated on the side of the terminal device.

Therefore, to reduce power consumption, a wake-up signal (wake-up signal, WUS), and a method in which the WUS is combined with a DRX mechanism in an RRC_CONNECTED state are introduced into NR. For a terminal device that supports the WUS, an "on duration" time area in each DRX cycle corresponds to a WUS occasion (WUS occasion) for sending the WUS, and the base station may send the WUS in a discontinuous transmission (discontinuous transmission, DTX) form for the terminal device on the WUS occasion, that is, the base station determines, based on a requirement for scheduling data, whether to send the WUS on the WUS occasion. The terminal device needs to determine, by monitoring the WUS on the WUS occasion, whether the base station has sent the WUS. When the terminal device is in the sleep state, the terminal device may be in a very low-power-consumption state. For example, the terminal device enables functions in only some modes or uses a simple receiving circuit to monitor and demodulate the WUS.

For WUS transmission, a new physical channel or signal may be introduced. However, introducing a new physical channel or signal for the WUS may increase extra consumption of resources on a network side. At the same time, when receiving the PDSCH, rate matching (rate matching) may further need to be performed for the newly introduced WUS, and this is unfavorable to flexibility of scheduling a data resource for the terminal device by the base station.

**SUMMARY**

This application provides a signal receiving method, a signal sending method, and an apparatus thereof, so that a control channel resource can be shared with a wake-up signal, thereby improving resource utilization efficiency.

According to a first aspect, a signal receiving method is provided, including: determining at least one time-frequency resource; monitoring a first signal on the at least one time-frequency resource, where the at least one time-frequency resource is further used to carry a downlink control channel; and determining, based on a result of monitoring the first signal, whether to start to monitor a first channel from a first time location.

It should be understood that the first signal in this application may be a wake-up signal (WUS) or a go-to-sleep signal (go-to-sleep, GTS), or may be a "power saving signal" (power saving signal), or another signal having a similar function. The WUS is used to wake up a terminal device, so that the terminal device starts to monitor a PDCCH from a time location. The go-to-sleep signal is used to indicate the terminal device to enter a sleep mode, that is, a low power consumption mode. The terminal device may stop monitoring the PDCCH in a time period before detecting a next go-to-sleep signal. The power saving signal may be a general term of a wake-up signal and a go-to-sleep signal, or may have functions of both a wake-up signal and a go-to-sleep signal.

According to the foregoing provided wake-up signal transmission method, the terminal device may receive first signals of different structures that are sent by a base station, for example, a wake-up signal or a go-to-sleep signal (go to sleep, GTS). A resource of an existing channel or signal is shared, to improve resource utilization efficiency on a network side, thereby flexibly meeting a coverage requirement of the wake-up signal or the go-to-sleep signal, and ensuring transmission reliability of the wake-up signal or the go-to-sleep signal.

With reference to the first aspect, in some implementations of the first aspect, the first signal is generated based on a first sequence.

Optionally, the WUS may carry some source bits or information bits, and may be used to indicate whether to wake up a terminal device or a group of terminal devices. Herein, the source bits may not undergo channel coding processing. For example, the first signal may be generated based on a ZC sequence of a specific length, or may be obtained after channel coding, for example, Reed-Muller coding or Kerdock coding, is performed on the source bits or the information bits. It should be understood that this is not limited in this application.

Optionally, the first signal has at least one structure, and first signals of different structures include different quantities of time-frequency units.

For example, it may be predefined that the WUS includes six time-frequency resource elements. In other words, the WUS has a same time-frequency structure as a REG. Each time-frequency resource element is one OFDM symbol in time domain and one resource block in frequency domain.

With reference to the first aspect and the foregoing implementations, in some possible implementations, the determining at least one time-frequency resource includes: determining the at least one time-frequency resource based on at least one first index number, where each of the at least one first index number is an index number of a control channel element CCE in a first control resource set (control resource set, CORESET).

With reference to the first aspect and the foregoing implementations, in some possible implementations, the method further includes: determining the at least one first index number and the first control resource set based on higher layer signaling, where the at least one first index number is directly carried in the higher layer signaling.

With reference to the first aspect and the foregoing implementations, in some possible implementations, the first index number is a CCE index number on a candidate downlink control channel in a search space set (search space set), and the CCE index number on the candidate downlink control channel in the search space set is a CCE index number in the first control resource set.

According to the solution provided in the foregoing embodiments, the wake-up signal or the go-to-sleep signal may be interleaved with a same mapping rule as that of a REG bundle, to obtain a frequency diversity gain and improve channel estimation performance. In addition, when the base station does not send the WUS, the downlink control channel may be sent on a corresponding transmission resource (the at least one time-frequency resource) of the wake-up signal or the go-to-sleep signal, to implement sharing of the WUS and the downlink control channel, and improve resource utilization efficiency.

With reference to the first aspect and the foregoing implementations, in some possible implementations, the first index number is an index number of a CCE whose number is i on a candidate downlink control channel whose aggregation level is L and whose number is m in the search space set, where $0 \leq i \leq L\text{-}1$.

With reference to the first aspect and the foregoing implementations, in some possible implementations, the method further includes: determining the aggregation level L, the number m of the candidate downlink control channel, and the number i of the CCE based on higher layer signaling, where the aggregation level L, the number m of the candidate downlink control channel, and the number i of the CCE are directly carried in the higher layer signaling; or determining the aggregation level L, the number m of the candidate downlink control channel, and the number i of the CCE based on a predefined value.

With reference to the first aspect and the foregoing implementations, in some possible implementations, the at least one first index number includes index numbers of all CCEs on at least one candidate downlink control channel at at least one aggregation level in the search space set.

Optionally, the terminal device determines the at least one aggregation level L and numbers m of M candidate downlink control channels at each aggregation level L based on the higher layer signaling, where M is an integer not less than 1.

In a possible implementation, for the M candidate downlink control channels at the aggregation level L, a number of each candidate downlink control channel is m, where m is not less than $m_L$ and is not greater than $m_L + M - 1$, and M and $m_L$ are directly carried or predefined in the higher layer signaling.

Optionally, that the terminal device determines the at least one time-frequency resource includes: determining the at least one time-frequency resource based on a mapping manner from a control channel element CCE to a resource element group REG, where the mapping manner is interleaved mapping or non-interleaved mapping.

With reference to the first aspect and the foregoing implementations, in some possible implementations, the first signal has at least one structure, and first signals of different structures include different quantities of time-frequency units. The determining the at least one time-frequency resource based on at least one first index number includes:

determining at least one second index number in the at least one first index number based on each structure of the first signal; and determining the at least one time-frequency resource based on the at least one second index number. The monitoring a first signal on the at least one time-frequency resource includes: monitoring a first signal of the structure on the at least one time-frequency resource. With reference to the first aspect and the foregoing implementations, in some possible implementations, the at least one second index number that is determined based on each structure of the first signal includes the index numbers of all the CCEs on the at least one candidate downlink control channel at the at least one aggregation level in the search space set; and the at least one second index number that is determined based on different structures of the first signal belongs to an index number of a CCE on at least one candidate downlink control channel at different aggregation levels in the search space set.

Optionally, the first signal further includes a reference signal used to demodulate the first signal. The method further includes: demodulating/descrambling the reference signal based on a first identifier, where the first identifier is an identifier of the wake-up signal or the go-to-sleep signal.

In a possible implementation, the first identifier is configured by using the higher layer signaling.

In another possible implementation, the first channel is a downlink control channel, and the first time location is a start time location of a discontinuous reception active time of the terminal device.

According to a second aspect, a signal sending method is provided, including: determining at least one time-frequency resource; sending a first signal on the at least one time-frequency resource, where the at least one time-frequency resource is further used to carry a downlink control channel

According to the foregoing provided wake-up signal transmission method, a base station may send first signals of different structures to a terminal device, for example, a wake-up signal or a go-to-sleep signal. A resource of an existing channel or signal is shared, to improve resource utilization efficiency on a network side, thereby flexibly meeting a coverage requirement of the wake-up signal or the go-to-sleep signal, and ensuring transmission reliability of the wake-up signal or the go-to-sleep signal.

With reference to the second aspect, in some implementations of the second aspect, the first signal is generated based on a first sequence.

With reference to the second aspect and the foregoing implementations, in some implementations of the second aspect, the determining at least one time-frequency resource includes: determining the at least one time-frequency resource based on at least one first index number, where each of the at least one first index number is an index number of a control channel element CCE in a first control resource set.

With reference to the second aspect and the foregoing implementations, in some implementations of the second aspect, the method further includes: determining the at least one first index number and the first control resource set, where the at least one first index number is directly carried in higher layer signaling; and sending the higher layer signaling. With reference to the second aspect and the foregoing implementations, in some implementations of the second aspect, the first index number is a CCE index number on a candidate downlink control channel in a search space set, and the CCE index number on the candidate downlink control channel in the search space set is a CCE index number in the first control resource set.

With reference to the second aspect and the foregoing implementations, in some implementations of the second aspect, the first index number is an index number of a CCE whose number is i on a candidate downlink control channel whose aggregation level is L and whose number is m in the search space set, where $0 \leq i \leq L -1$.

With reference to the second aspect and the foregoing implementations, in some implementations of the second aspect, the method further includes: determining the aggregation level L, the number m of the candidate downlink control channel, and the number i of the CCE, where the aggregation level L, the number m of the candidate downlink control channel, and the number i of the CCE are directly carried in higher layer signaling; and sending the higher layer signaling; or

determining the aggregation level L, the number m of the candidate downlink control channel, and the number i of the CCE based on a predefined value.

With reference to the second aspect and the foregoing implementations, in some implementations of the second aspect, the at least one first index number includes index numbers of all CCEs on at least one candidate downlink control channel at at least one aggregation level in the search space set.

Optionally, the terminal device determines the at least one aggregation level L and numbers m of M candidate downlink control channels at each aggregation level L based on the higher layer signaling, where M is an integer not less than 1. In a possible implementation, a quantity of candidate downlink control channels at the aggregation level L is M, a number of each candidate downlink control channel is m, where m is not less than $m_L$ and is not greater than $m_L + M - 1$, and M and $m_L$ are directly carried or predefined in the higher layer signaling.

Optionally, that the terminal device determines the at least one time-frequency resource includes: determining the at least one time-frequency resource based on a mapping manner from a control channel element CCE to a resource element group REG, where the mapping manner is interleaved mapping or non-interleaved mapping.

With reference to the second aspect and the foregoing implementations, in some implementations of the second aspect, the first signal has at least one structure, and first signals of different structures include different quantities of time-frequency units.

The determining the at least one time-frequency resource based on at least one first index number includes:

determining at least one second index number in the at least one first index number based on each structure of the first signal; and

determining the at least one time-frequency resource based on the at least one second index number. The sending a first signal on the at least one time-frequency resource includes:

sending a first signal of the structure on the at least one time-frequency resource.

With reference to the second aspect and the foregoing implementations, in some possible implementations of the second aspect, the at least one second index number that is determined based on each structure of the first signal includes the index numbers of all the CCEs on the at least one candidate downlink control channel at the at least one aggregation level in the search space set; and the at least one second index number that is determined based on different structures of the first signal belongs to an index number of a CCE on at least one candidate downlink control channel at different aggregation levels in the search space set.

Optionally, the first signal further includes a reference signal used to demodulate the first signal. The method further includes: demodulating/descrambling the reference signal based on a first identifier, where the first identifier is an identifier of the wake-up signal or the go-to-sleep signal.

In a possible implementation, the first identifier is configured by using the higher layer signaling.

In another possible implementation, the first channel is a downlink control channel, and the first time location is a start time location of a discontinuous reception active time of the terminal device.

According to a third aspect, a signal receiving apparatus is provided. The apparatus may be a terminal device, or may be a chip in a terminal device. The apparatus may include a processing unit and a transceiver unit. When the apparatus is a terminal device, the processing unit may be a processor, and the transceiver unit may be a transceiver. The terminal device may further include a storage unit, and the storage unit may be a memory. The storage unit is configured to store instructions, and the processing unit executes the instructions stored in the storage unit, so that the terminal device performs a corresponding function in the first aspect. When the apparatus is a chip in a terminal device, the processing unit may be a processor, the transceiver unit may be an input/output interface, a pin, a circuit, or the like. The processing unit executes instructions stored in a storage unit, so that the terminal device performs a corresponding function in the first aspect. The storage unit may be a storage unit (for example, a register or a cache) in the chip, or may be a storage unit (for example, a read only memory or a random access memory) outside the chip in the terminal device.

According to a fourth aspect, a signal sending apparatus is provided. The apparatus may be a network device, or may be a chip in a network device. The apparatus may include a processing unit and a transceiver unit. When the apparatus is a network device, the processing unit may be a processor, and the transceiver unit may be a transceiver. The network device may further include a storage unit, and the storage unit may be a memory. The storage unit is configured to store instructions, and the processing unit executes the instructions stored in the storage unit, so that the network device performs a corresponding function in the second aspect. When the apparatus is a chip in a network device, the processing unit may be a processor, the transceiver unit may be an input/output interface, a pin, a circuit, or the like. The processing unit executes instructions stored in a storage unit, so that the network device performs a corresponding function in the second aspect. The storage unit may be a storage unit (for example, a register or a cache) in the chip, or may be a storage unit (for example, a read only memory or a random access memory) outside the chip in the network device.

According to a fifth aspect, a communications system is provided. The system includes the terminal device in the third aspect and the network device in the fourth aspect.

According to a sixth aspect, a computer program product is provided. The computer program product includes computer program code. When the computer program code is run on a computer, the computer is enabled to perform the methods in the foregoing aspects.

According to a seventh aspect, a computer-readable medium is provided. The computer-readable medium stores program code. When the computer program code is run on a computer, the computer is enabled to perform the methods in the foregoing aspects.

## BRIEF DESCRIPTION OF DRAWINGS

FIG. 1 is a schematic architectural diagram of a mobile communications system to which embodiments of this application are applicable;

FIG. 2 is a schematic diagram of an example of a transport block and a code block according to an embodiment of this application;

FIG. 3 is a schematic diagram of an example of a DMRS configuration according to an embodiment of this application;

FIG. 4 is a schematic interaction diagram of an example of a wake-up signal transmission method according to an embodiment of this application;

FIG. 5 is a schematic diagram of another example of transport block division according to an embodiment of this application;

FIG. 6 is a schematic diagram of an example of a wake-up signal transmission apparatus according to an embodiment of this application;

FIG. 7 is a schematic diagram of another example of a wake-up signal transmission apparatus according to an embodiment of this application;

FIG. 8 is a schematic diagram of another example of a wake-up signal transmission apparatus according to an embodiment of this application;

FIG. 9 is a schematic diagram of another example of a wake-up signal transmission apparatus according to an embodiment of this application;

FIG. 10 is a schematic interaction diagram of an example of a wake-up signal transmission method according to an embodiment of this application;

FIG. 11 is a schematic diagram of an example of a mapping relationship between a WUS resource and a CCE in a CORESET according to an embodiment of this application;

FIG. 12 is a schematic diagram of an example of a relationship between REG bundle indexes and REG indexes according to an embodiment of this application;

FIG. 13 is a schematic diagram of a CCE index number of a candidate PDCCH at an aggregation level AL 2 according to an embodiment of this application;

FIG. 14 is a schematic diagram of determining, by using parameters L, m, and i, a CCE index number associated with a WUS;

FIG. 15 is a schematic diagram of an example of a CCE index associated with a candidate WUS resource;

FIG. 16 is a schematic diagram of another example of a CCE index associated with a candidate WUS resource;

FIG. 17 is a schematic block diagram of an example of a wake-up signal transmission apparatus according to an embodiment of this application;

FIG. 18 is a schematic block diagram of another example of a wake-up signal transmission apparatus according to an embodiment of this application;

FIG. 19 is a schematic structural diagram of a terminal device according to an embodiment of this application; and

FIG. 20 is a schematic structural diagram of a network device according to an embodiment of this application.

## DESCRIPTION OF EMBODIMENTS

The following describes technical solutions of this application with reference to accompanying drawings.

The technical solutions in the embodiments of this application may be applied to various communications systems, for example, a long term evolution (long term evolution, LTE) system, an LTE frequency division duplex (frequency division duplex, FDD) system, an LTE time division duplex (time division duplex, TDD) system, a fifth generation (5th generation, 5G) mobile communications system, a new radio (new radio, NR) communications system, and a future mobile communications system.

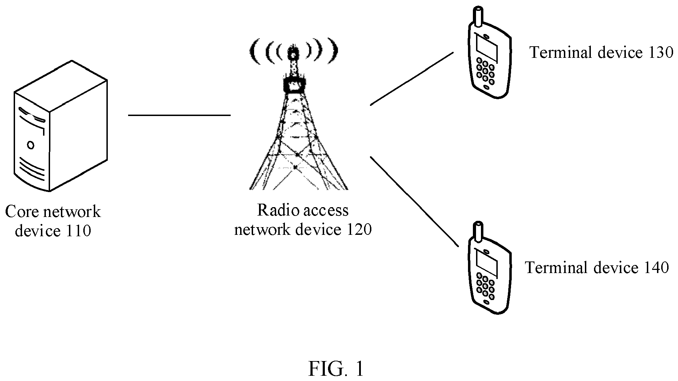

FIG. 1 is a schematic architectural diagram of a mobile communications system to which embodiments of this application are applicable. As shown in FIG. 1, the mobile communications system 100 may include a core network device 110, a radio access network device 120, and at least one terminal device (for example, a terminal device 130 and a terminal device 140 in FIG. 1). The terminal device is connected to the radio access network device in a wireless manner, and the radio access network device is connected to the core network device in a wireless or wired manner. The core network device and the radio access network device may be different physical devices that are independent of each other, or functions of the core network device and logical functions of the radio access network device may be integrated into a same physical device, or some functions of the core network device and some functions of the radio access network device may be integrated into one physical device. The terminal device may be at a fixed location, or may be mobile. FIG. 1 is merely a schematic diagram. The communications system may further include another network device, for example, may further include a wireless relay device and a wireless backhaul device, which are not shown in FIG. 1. Quantities of core network devices, radio access network devices, and terminal devices included in the mobile communications system are not limited in this embodiment of this application.

In the mobile communications system 100, the radio access network device 120 is an access device through which the terminal device accesses the mobile communications system in a wireless manner. The radio access network device 120 may be a base station, an evolved NodeB (evolved node B, eNB), a home base station, an access point (access point, AP) in a wireless-fidelity (wireless-fidelity, Wi-Fi) system, a wireless relay node, a wireless backhaul node, a transmission point (transmission point, TP), a transmission reception point (transmission reception point, TRP), or the like; or may be a gNB in an NR system; or may be a component or some devices that constitute a base station, for example, a central unit (central unit, CU), a distributed unit (distributed unit, DU), or a baseband unit (baseband unit, BBU). It should be understood that a specific technology and a specific device form that are used by the radio access network device are not limited in this embodiment of this application. In this application, the radio access network device is referred to as a network device for short. Unless otherwise specified, in this application, all network devices are radio access network devices. In this application, the network device may be a network device itself, or may be a chip used in a network device to complete a wireless communication processing function.

The terminal device in the mobile communications system 100 may also be referred to as a terminal, user equipment (user equipment, UE), a mobile station (mobile station, MS), a mobile terminal (mobile terminal, MT), and the like. The terminal device in this embodiment of this application may be a mobile phone (mobile phone), a tablet (Pad), a computer having a wireless transceiver function, or a wireless terminal used in scenarios such as virtual reality (virtual reality, VR), augmented reality (augmented reality, AR), industrial control (industrial control), self driving (self driving), telemedicine (remote medical), a smart grid (smart grid), transportation safety (transportation safety), a smart city (smart city), and a smart home (smart home). In this application, the foregoing terminal device and a chip that can be used in the foregoing terminal device are collectively referred to as a terminal device. It should be understood that a specific technology and a specific device form that are used by the terminal device are not limited in this embodiment of this application.

It should be understood that division of manners, cases, types, and embodiments in the embodiments of this application are merely for ease of description, but should not constitute any special limitation, and features in various manners, types, cases, and embodiments may be combined when there is no contradiction.

It should be further understood that "first", "second", and "third" in the embodiments of this application are merely used for differentiation, and should not constitute any limitation on this application. For example, a "first control resource set" in the embodiments of this application indicates a downlink control channel set.

It should be understood that sequence numbers of the foregoing processes do not mean execution sequences in various embodiments of this application. The execution sequences of the processes should be determined based on functions and internal logic of the processes, and should not be construed as any limitation on the implementation processes of the embodiments of this application.

It should be further noted that in the embodiments of this application, "presetting" and "pre-configuration" may be implemented by prestoring, in a device (for example, including a terminal device and a network device), corresponding code, a corresponding table, or another manner that may be used to indicate related information. A specific implementation is not limited in this application.

It should be further noted that "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects. The technical solutions provided in this application are described in detail below with reference to the accompanying drawings.

For ease of understanding the embodiments of this application, the following first briefly describes several concepts that are in this application.

1. Radio frame, time unit, and time domain symbol

Time domain resources used by a network device and a terminal device for wireless communication may be divided into a plurality of radio frames or time units. In addition, in the embodiments of this application, the plurality of radio frames may be consecutive, or some adjacent radio frames may be spaced by preset intervals. This is not particularly limited in the embodiments of this application.

In the embodiments of this application, one radio frame may include one or more subframes. Alternatively, one radio frame may include one or more slots. Alternatively, one radio frame may include one or more symbols.

In the embodiments of this application, a symbol is also referred to as a time domain symbol, and may be an orthogonal frequency division multiplexing (orthogonal frequency division multiplexing, OFDM) symbol, or may be a single-carrier frequency division multiple access (single-carrier frequency division multiple access, SC-FDMA) symbol. SC-FDMA is also referred to as orthogonal frequency division multiplexing with transform precoding (orthogonal frequency division multiplexing with transform precoding, OFDM with TP).

In the embodiments of this application, there is a time sequence relationship between the plurality of time units in time domain, and time lengths corresponding to any two time units may be the same or may be different.

2. Frequency band (frequency band) and frequency bandwidth

The unit of the frequency band is hertz (Hz), which refers to a part between two specific frequency limits on a radio spectrum. For a signal, a frequency band is a frequency range between a highest frequency and a lowest frequency that are of the signal (a considered frequency component of the signal needs to be greater than a specific value). For a channel, a frequency band is a frequency range between a highest frequency and a lowest frequency that are of a signal allowed to be transmitted (considered attenuation of the channel needs to be within a specific range). Generally, for the channel, the frequency band is the frequency range between the highest frequency and the lowest frequency that are of the signal allowed to be transmitted. If there is a big difference between the highest frequency and the lowest frequency, it may be considered that the frequency band is equal to the highest frequency of the signal allowed to be transmitted.

For the signal, the frequency band is the frequency range between the highest frequency and the lowest frequency that are of the signal. If there is a big difference between the highest frequency and the lowest frequency, it may be roughly considered that the frequency band is equal to the highest frequency of the signal.

The frequency bandwidth is short for "bandwidth", called necessary bandwidth sometimes, is a difference between a highest frequency and a lowest frequency that are of a signal when the analog signal is transmitted, and the unit is Hz. In other words, the frequency bandwidth is an allowable value of frequency bandwidth that needs to be occupied to ensure a rate and quality of to-be-transmitted information.

Effective bandwidth: A frequency range of a signal is referred to as frequency bandwidth of the signal. Much energy of the signal is usually included in a frequency band with a relatively narrow frequency bandwidth, which is the effective bandwidth.

3. Carrier and subcarrier

The carrier may be understood as a periodic oscillation signal that works on a predefined single frequency. For example, the carrier may be a sine wave, or may be a non-sine wave such as a periodic pulse sequence. Changing the carrier to represent data in a form suitable for transmission is what we call modulation. The carrier after being modulated is called a modulated signal, which includes full-wave characteristics of a modulation signal. A sending device loads data signals to a carrier signal. A receiving device receives the data signals based on a frequency of a carrier, and then extracts the signals to obtain the required data signals.

A sub-channel in multi-carrier communication is referred to as a subcarrier (subcarrier). In an NR system, a subcarrier is a basic unit in frequency domain, and a subcarrier may be 15 kHz. A serial data stream is converted into a parallel data stream by using an orthogonal frequency division multiplexing technology, and different subcarriers are used to carry data signals.

4. Overview of a time-frequency resource

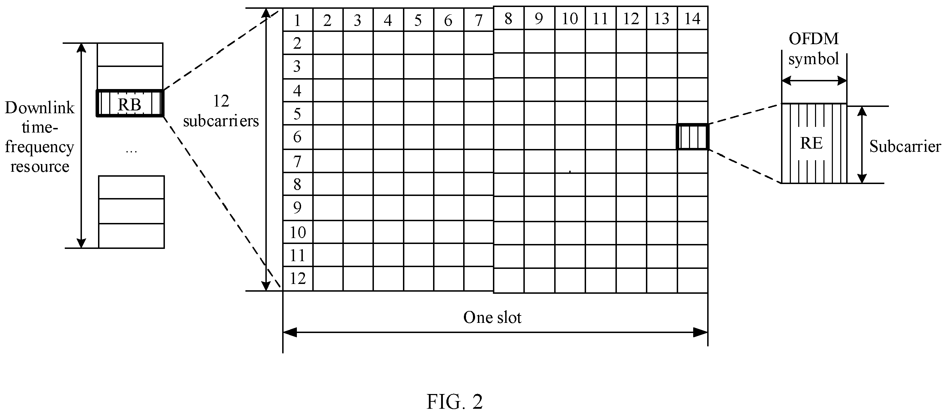

FIG. 2 is a schematic diagram of an example of a downlink time-frequency resource grid. As shown in FIG. 2, each element on the resource grid is referred to as a resource element (resource element, RE), the RE is a smallest physical resource, and one RE includes one subcarrier in one OFDM symbol.

An uplink time-frequency resource grid is similar to the downlink time-frequency resource grid. A slot (slot) is a basic time unit for downlink resource scheduling in NR. Generally, one slot includes 14 OFDM symbols in terms of time. In time domain, an NR transmission process includes frames (frame) whose time lengths are 10 ms. Each frame is divided into 10 subframes (subframe) whose sizes are the same and lengths are 1 ms. Each subframe may include one or more slots. For example, when a subcarrier is 15 kHz, it is determined, based on a subcarrier spacing, that each subframe includes one slot. Each frame is identified by a system frame number (system frame number, SFN), and a periodicity of the SFN is equal to 1024. Therefore, the SFN is automatically repeated after 1024 frames.

A network device transmits a physical downlink shared channel (physical downlink shared channel, PDSCH) and a physical downlink control channel (physical downlink control channel, PDCCH) for a terminal device. To correctly receive the PDSCH, the terminal device needs to first demodulate the PDCCH. Downlink control information (downlink control information, DCI) carried on the PDCCH includes related information required for receiving the PDSCH, for example, a time-frequency resource location and a time-frequency resource size of the PDSCH, and multi-antenna configuration information.

The following describes some basic concepts of a downlink control channel, including a control channel element (control channel element, CCE), a search space (search space), a resource element group (resource element group, REG), a resource element group bundle (resource element group bundle, REG bundle), a control resource set (control resource set, CORESET), and so on.

The downlink control channel is transmitted in the control resource set CORESET, and the CORESET includes a plurality of physical resource blocks (physical resource block, PRB) in frequency domain, and includes one to three OFDM symbols in time domain that may be located at any location in a slot. A size of a time-frequency resource occupied by the CORESET and a time frequency position of the CORESET may be semi-statically configured based on a higher-layer parameter.

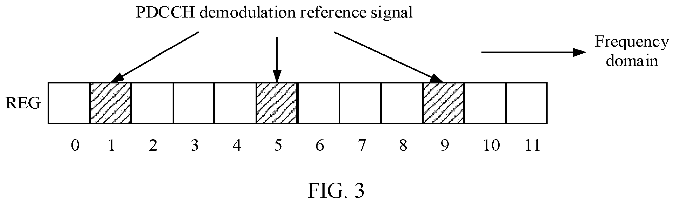

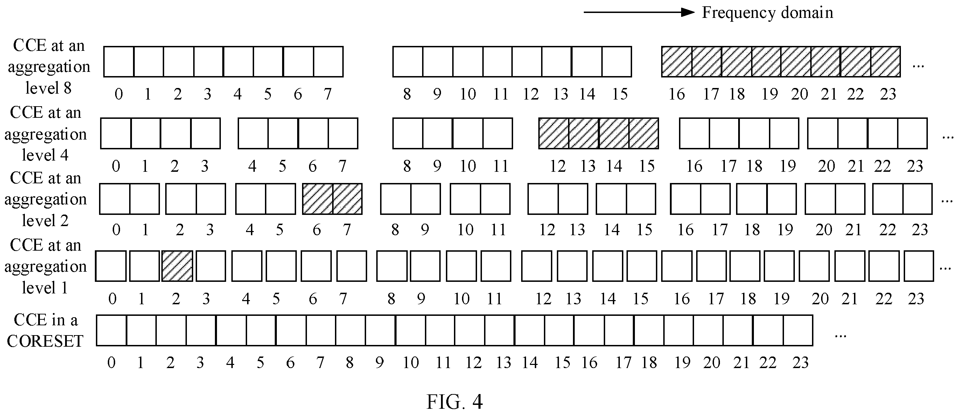

The resource element group (resource-element group, REG) is a physical resource unit that occupies one OFDM symbol in time domain, and occupies one resource block in frequency domain. In other words, the REG includes 12 subcarriers that are consecutive in frequency domain. FIG. 3 is a schematic structural diagram of an example of a REG resource. As shown in FIG. 3, one REG may include 12 REs. In the 12 REs, three REs are used to map a PDCCH demodulation reference signal, and nine REs are used to map DCI. The REs used to map the PDCCH demodulation reference signal are evenly distributed in the REG, and are located on subcarriers numbered 1, 5, and 9 in the REG. A control channel element (control channel element, CCE) is a basic unit that constitutes a PDCCH. It may be understood that one CCE may be used to map six REGs of the PDCCH. FIG. 4 is a schematic diagram of an example of a CCE set of a PDCCH. As shown in FIG. 4, each CCE in a CORESET has a corresponding index number. An index number of a CCE is a logical concept, and each CCE index number has a correspondence with index numbers of six REGs to which the CCE index number is mapped.

It should be understood that a given PDCCH may include 1, 2, 4, 8, and 16 CCEs, and a specific quantity of the CCEs is determined by a DCI payload size (DCI payload size) and a required coding rate. The quantity of CCEs forming the PDCCH is also referred to as an aggregation level (aggregation level, AL). A network device may adjust the aggregation level AL of the PDCCH based on a status of an actually transmitted radio channel, to implement link adaptation transmission. One CCE corresponds to six REGs on a physical resource, and an actual physical resource to which one CCE is mapped includes 72 REs, where 18 REs are used for DMRS transmission, and 54 REs are used for DCI information transmission.

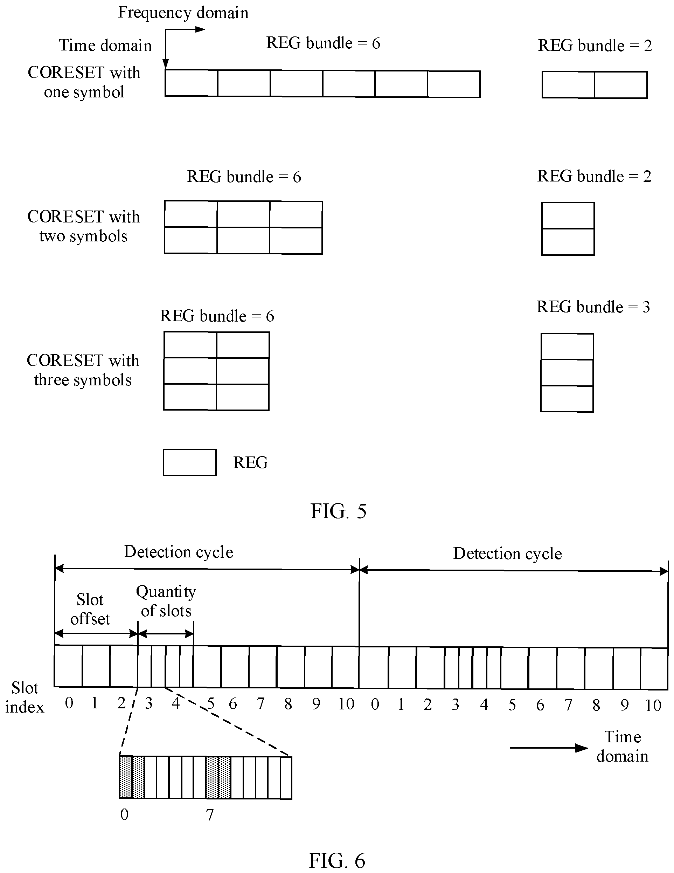

A resource element group bundle (REG bundle) includes a plurality of REGs that are consecutive in time domain and frequency domain, a quantity of the REGs included in the REG bundle is two, three, and six, and a same precoder (precoder) is used for PDCCHs mapped in one REG bundle, that is, a terminal device may perform joint channel estimation in time domain and/or frequency domain by using a demodulation reference signal in the REG bundle. The quantity of the REGs included in the REG bundle in time domain and frequency domain is related to a quantity of CORESET time domain symbols and a configuration of a REG bundle size. The specific quantity may be shown in an example of a time domain/frequency domain structure of the REG bundle listed in Table 1. FIG. 5 is a structural diagram of REG bundles in cases of different CORESET time domain symbols.

**Table 1**

| CORESET time domain configuration | Quantity of REGs of a REG bundle in time domain and frequency domain | | |
|---|---|---|---|
| | Time domain | Frequency domain | |
| | | A REG bundle size is 6 | The REG bundle size is not equal to 6 |
| One OFDM symbol | 1 | 6 | 2 |
| Two OFDM symbols | 2 | 3 | 1 |
| Three OFDM symbols | 3 | 2 | 1 |

The foregoing describes basic concepts related to the time-frequency resource with reference to the accompanying drawings. It can be learned from the foregoing content that a search space (search space) is a set of candidate PDCCHs (PDCCH candidate) at an aggregation level. Because an aggregation level of a PDCCH actually sent by the network device varies with time, and no related signaling is used to notify the terminal device of the aggregation level of the PDCCH actually sent by the network device, the terminal device needs to blindly monitor the PDCCH at different aggregation levels, where a PDCCH to be blindly monitored is referred to as a candidate PDCCH. The terminal device decodes, in a search space, all candidate PDCCHs including CCEs. If a cyclic redundancy check (cyclic redundancy check, CRC) passes, it is considered that content of a decoded PDCCH is valid for the terminal device, and related information after decoding is processed.

To reduce complexity of the blind detection performed by the terminal device, a set of CCEs for the blind detection needs to be specified. Specifically, a start CCE index number of the candidate PDCCH needs to exactly divide the aggregation level of the candidate PDCCH. As shown in FIG. 4, a candidate PDCCH at an aggregation level 2 can start only from a CCE sequence number that can be exactly divided by 2, and a same principle is applicable to a search space at another aggregation level. In addition, a CCE set in which the search space is located may be further determined based on a higher layer parameter in search space set configuration information and a predefined rule.

It should be understood that, in this application, the search space set configuration information may be carried in higher layer signaling or physical layer signaling. In this embodiment of this application, the higher layer signaling may be radio resource control (radio resource control, RRC) signaling, or may be media access control (media access control, MAC) layer signaling. The physical layer signaling may be downlink control information DCI. A configuration method is not limited in this embodiment of this application.

It should be understood that, in NR, the terminal device may be in different states, and one of the states is a radio resource control connected (RRC_CONNECTED) state. In the RRC_CONNECTED state, the UE has established an RRC context (context), that is, the terminal device has established an RRC connection, that is, a parameter required for communication between the terminal device and a radio access network device is known to the terminal device and the radio access network device. The RRC_CONNECTED state is mainly used by the terminal device to perform data transmission.

Generally, a packet-based data stream is usually bursty, that is, in a period of time, data is transmitted, but in a next relatively long period of time, no data is transmitted. Therefore, in NR, a discontinuous reception (discontinuous reception, DRX) processing procedure may be configured for the terminal device. When no data is transmitted, the terminal device may be stopped from monitoring a PDCCH, to reduce power consumption and prolong battery life. FIG. 6 is a schematic diagram of an example of a relationship between a CORESET and a time domain position of a search space. As shown in FIG. 6, in DRX, a network device may configure a discontinuous reception cycle (DRX cycle) for a terminal device in an RRC_CONNECTED state. The DRX cycle includes an "on duration" time area, and the time area may be a time length of a DRX timer drx-onDurationTimer, or is called duration of an on duration timer.

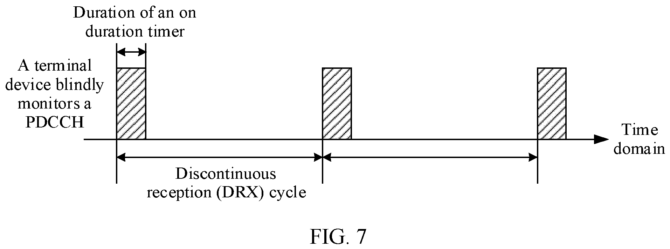

FIG. 7 is a schematic diagram of an example of a discontinuous reception cycle. As shown in FIG. 7, in an "on duration" time period, a terminal device may monitor a PDCCH. If the terminal device does not detect the PDCCH in the "on duration" time period, the terminal device may disable a receiving circuit and enter a sleep state in a remaining time period of the DRX cycle, to reduce power consumption of the terminal device.

In NR, the terminal device works on a larger radio frequency and baseband bandwidth. In a DRX cycle, the terminal device needs to first wake up from a sleep state, enable a radio frequency and a baseband circuit to obtain time-frequency synchronization, and then monitor a PDCCH in an "on duration" time period. These processes cost a lot of energy consumption. However, data transmission is usually bursty and sparse in terms of time. If no data scheduling is performed by a network device on the terminal device in the "on duration" time period, unnecessary energy consumption is generated on the side of the terminal device. Therefore, to reduce power consumption, a wake-up signal (wake-up signal, WUS), and a method in which the WUS is combined with a DRX mechanism in an RRC_CONNECTED state are introduced into NR.

It should be understood that the methods in this application may be applied to a communications system that can use a DRX mechanism. The following describes the DRX mechanism in this application.

DRX may enable a terminal device to periodically enter a sleep state (sleep mode or sleep state) in some cases, and not to monitor a PDCCH. When the terminal device needs to monitor the PDCCH, the terminal device wakes up (wake up) from the sleep state. In this way, an objective of saving power can be achieved on the side of the terminal device.

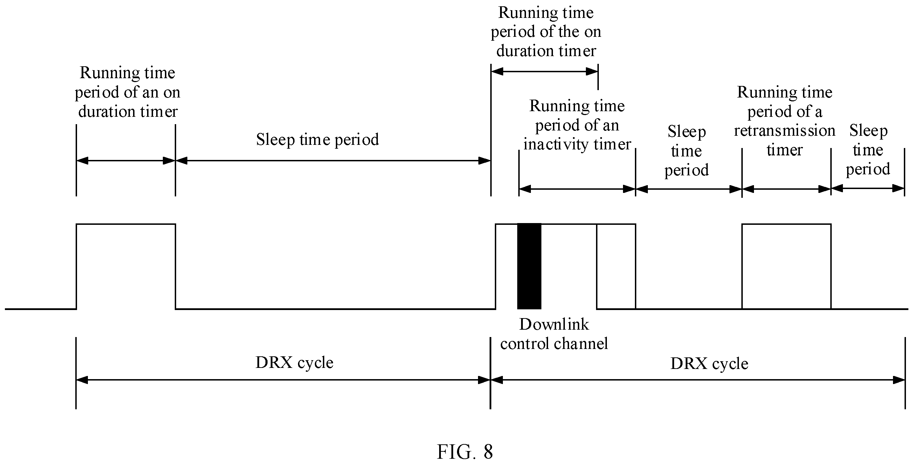

FIG. 8 shows a typical DRX cycle. As shown in FIG. 8, in this application, one DRX cycle may include an active time period (active time) and a sleep time period.

The active time period may also be referred to as a running time period (running time), that is, running time periods of DRX timers of a terminal device. For example, the active time period in FIG. 8 may include a running time period of an on duration timer, a running time period of an inactivity timer, and a running time period of a retransmission timer. The terminal device may communicate with a network device in the active time period to monitor a downlink control channel. As shown in FIG. 8, in the active time period, the terminal device monitors a downlink PDCCH slot. In this period, the terminal device is in a wake-up state. The sleep time period may also be referred to as an opportunity for DRX (opportunity for DRX) time period. The terminal device may not perform data transmission during the sleep time period. As shown in FIG. 8, in the opportunity for DRX time period, to save power, the terminal device enters the sleep time period in which the terminal device does not monitor the PDCCH slot. It can be seen from FIG. 8 that a longer time used for DRX sleep indicates lower power consumption of the terminal device, but correspondingly indicates a larger service transmission delay.

In a DRX mechanism, the terminal device may receive downlink data and an uplink grant in activation duration. In addition, the terminal device may perform a DRX cycle based on a paging (paging) periodicity in an idle mode. Alternatively, in a radio resource control (radio resource control, RRC) connected state, the terminal device may use a plurality of timers in cooperation with each other to ensure reception of the downlink data and the uplink grant. The foregoing timers are described in detail below.

Communication of a large amount of data inevitably causes a sharp increase in power consumption, resulting in insufficient battery supply, or increased heat dissipation caused due to the increase in power consumption, and causing a system operational failure. The use of a DRX function greatly reduces the power consumption.

In this application, a control entity of the DRX function may be located at a MAC layer of a protocol stack. A main function of the control entity is to control sending of an instruction to a physical layer, to indicate the physical layer to monitor a PDCCH at a specific time. As for other time periods, a receive antenna is not enabled, and the control entity is in a sleep state.

As an example instead of a limitation, in this application, the DRX cycle may include a short DRX cycle and a long DRX cycle.

Specifically, as described above, one DRX cycle may be equal to a sum of the active time period and the sleep time period. A communications system may separately configure a short DRX cycle (short DRX cycle) or a long DRX cycle (long DRX cycle) for the terminal device based on different service scenarios. For example, when a voice service is performed, a voice codec usually sends one voice data packet every 20 milliseconds (ms). In this case, a short DRX cycle of 20 ms may be configured, and a long DRX cycle may be configured for a relatively long silent period during a voice call.

To be specific, if a configuration of the terminal device includes a short DRX cycle and a short DRX cycle timer, the terminal device runs based on the short DRX cycle, and enters a long DRX cycle running state after the short DRX cycle timer expires.

In addition, the terminal device enters the long DRX cycle running phase after activation duration or the short DRX timer expires.

The following describes, by using an example, the timers used in the DRX mechanism.

1. On duration timer (drx-on duration timer or drx-on duration timer)

The drx-on duration timer is used to determine duration of "on duration". When the drx-on duration timer is running or before the drx-on duration timer expires, a terminal device is in the "on duration" time period and may monitor a PDCCH.

2. DRX-inactivity timer (drx-inactivity timer or drx-inactivity timer)

Specifically, it is assumed that a slot n is the last slot in the on duration time period. In this case, it happens that a piece of large-byte data needs to be sent to the terminal device on a network side, and the data cannot be all sent in the slot n. If the terminal device executes the drx-on duration timer, the terminal device enters the DRX sleep state in a slot n+1, does not monitor the PDCCH, and cannot receive any downlink PDSCH data from the network side. The network side can continue to send the data that is unfinished in sending to the terminal device only when a DRX cycle ends and a next on duration time period arrives. This increases processing delays of all services. To prevent this situation, the drx-inactivity timer is added to the DRX mechanism. If the drx-inactivity timer is running, the terminal device needs to continue monitoring a downlink PDCCH subframe even if the configured on duration timer expires (that is, the on duration time period ends), until the drx-inactivity timer expires. After a drx-inactivity timer mechanism is added, a data processing delay is significantly reduced.

3. DRX retransmission timer (DRX retransmission timer DL or *drx*-retransmission timer DL)

In the DRX mechanism, the DRX retransmission timer indicates a minimum quantity of slots that the terminal device needs to wait before receiving the expected downlink retransmission data. The DRX retransmission timer DL refers to a time length during which the terminal device monitors, after a HARQ RTT timer expires, the PDCCH for receiving data that fails to be transmitted and that needs to be retransmitted.

In this application, the active time period may include a time period corresponding to a running period of at least one of the on duration timer, the drx-inactivity timer, and the DRX retransmission timer.

It should be understood that the foregoing listed timers are merely examples for description, and this application is not limited thereto.

In an RRC connected state, a working manner of combining a timer and DRX is adopted, and the network device also works in the same DRX working manner as that of the terminal device, and learns of, in real time, whether the terminal device is in the active time period (active time) or the sleep time period, to ensure that data is transmitted in the active time period, and data transmission is not performed in the sleep time period.

A balance between power consumption and a delay needs to be considered when the DRX cycle is selected. In one aspect, a long DRX cycle helps reduce power consumption, but also indicates a limitation on a network device scheduler, which is not conducive to reducing a delay. In another aspect, when there is new data transmission, a shorter DRX cycle facilitates a faster response and reduces a delay. To meet the foregoing requirement, two DRX cycle parameters may be configured for each terminal device: a drx-long cycle (ranging from 10 ms to 10240 ms) and a drx-short cycle (ranging from 2 ms to 640 ms). One is a long DRX cycle (long DRX cycle) and the other is short DRX cycle (short DRX cycle).

In an RRC CONNECTED state, for a terminal device configured with a DRX mechanism, the terminal device may obtain, according to the following formula, an SFN in which a start location (that is, a start time location) of "on duration" is located and a subframe number of a subframe in a frame:

$$[(\text{SFN} \times 10) + \text{subframe number}] \bmod V = Y$$

V is a DRX cycle used by the terminal device. If the terminal device uses a long DRX cycle, a value of V is drx-long cycle, and a value of Y is a parameter: drx-start offset, which may be configured by using higher layer signaling, and a unit is 1 ms. If the terminal device uses a short DRX cycle, a value of V is drx-short cycle, and a value of Y is (drx-short cycle) modulo (drx-short cycle), and a unit is 1 ms.

It should be understood that, in this application, the start location of the "on duration" may also be understood as a start location of a DRX cycle.

In addition, because a scheduling unit of NR is a slot (slot), and for a subcarrier greater than 15 kHz, one subframe may include a plurality of slots (for example, for a subcarrier spacing of 60 kHz, one subframe may include four slots), the higher layer signaling configures the parameter drx-slot offset for the terminal device, and the terminal device further determines, by using the parameter, a slot in which the start time location of the "on duration" (also referred to as a DRX cycle) is located, where the slot is located in the subframe.

It should be understood that, in this patent, the start location of the "on duration" may also be understood as the start location of the DRX cycle.

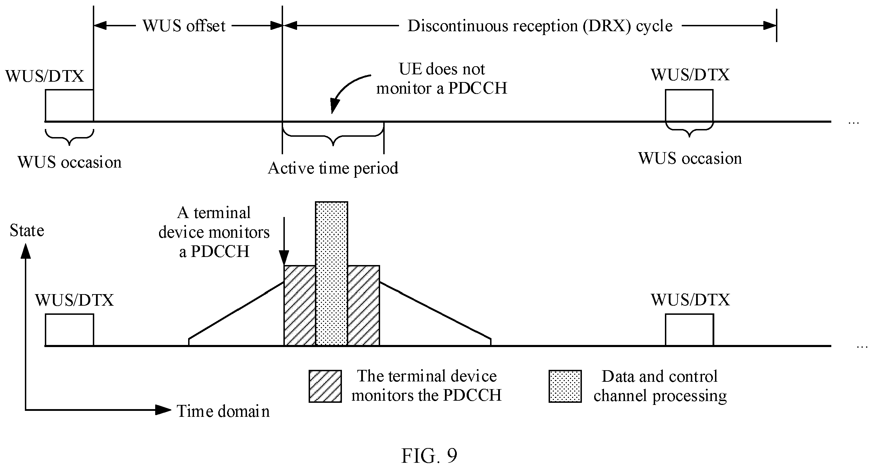

FIG. 9 is a schematic diagram of an example of a combination of a wake-up signal and a DRX mechanism in an RRC _CONNECTED state. For a terminal device that supports a WUS, for "on duration" in each DRX cycle, there is a "WUS occasion" (WUS occasion, which may be understood as a subframe or a slot in which the WUS is located) that is before a start location of the "on duration" and that corresponds to the "on duration". A network device may send the WUS in a discontinuous transmission (discontinuous transmission, DTX) form for the terminal device on the "WUS occasion", that is, the network device determines, based on a requirement for scheduling data, whether to send the WUS on the "WUS occasion". The terminal device needs to determine, by monitoring the WUS on the "WUS occasion", whether the network device has sent the WUS. When the terminal device is in a sleep state, the terminal device may be in a very low-power-consumption state (for example, the terminal device enables functions in only some modems or uses a simple receiving circuit) to monitor and demodulate the WUS. With reference to the schematic diagram in FIG. 9, when the terminal device does not detect the WUS on the "WUS occasion" or the detected WUS indicates that no data scheduling is performed on the terminal device in a corresponding "on duration" time period, the terminal device may directly enter the sleep state, and does not need to monitor a PDCCH in the "on duration" time period. If the terminal device detects the WUS on the "WUS occasion" or the detected WUS indicates that data scheduling is performed on the terminal device in a corresponding "on duration" time period, the terminal device is "woken up (wake up)" from the sleep state, that is, in this case, the terminal device may start a timer based on the foregoing DRX mechanism process to monitor a PDCCH. In this case, the terminal device needs enough time to enable functions of all modems, so that the terminal device can monitor the PDCCH in a DRX cycle and receive a data channel. Therefore, there is a time interval between a start time location of the "WUS occasion" and a start time location of the "on duration", and the time interval may be referred to as a "WUS offset" (WUS offset), or may be referred to as a gap value (gap value). Generally, a parameter T is used to indicate the time interval, the parameter may be configured by using higher layer signaling (a value range is from several milliseconds to hundreds of milliseconds), and the network device may determine a value of the parameter based on a capability reported by the terminal device. In NR, for a WUS design, a possible solution is to introduce a new physical channel or signal for a WUS. For example, in an LTE narrow band internet of things (narrow band internet of things, NB-IoT) technology, an independent sequence is designed for the WUS, for example, a sequence based on Zadoff-Chu (ZC). A length of the sequence is 132. Alternatively, a sequence may be obtained after channel coding, for example, Reed-Muller coding or Kerdock coding, is performed on source bits or information bits. It should be understood that this is not limited in this application. In NR, introducing a new physical channel or signal for the WUS may increase extra consumption of resources on the network side. At the same time, a WUS signal may be introduced in NR R16. Therefore, for some terminal devices that support only NR R15, when receiving a PDSCH, rate matching (rate matching) may further need to be performed for the newly introduced WUS, and this is unfavorable to flexibility of scheduling a data resource for the terminal device by the network device.

Therefore, this application provides a wake-up signal transmission method. For a WUS, a resource of an existing channel or signal in NR is shared, to improve resource utilization efficiency on a network side.

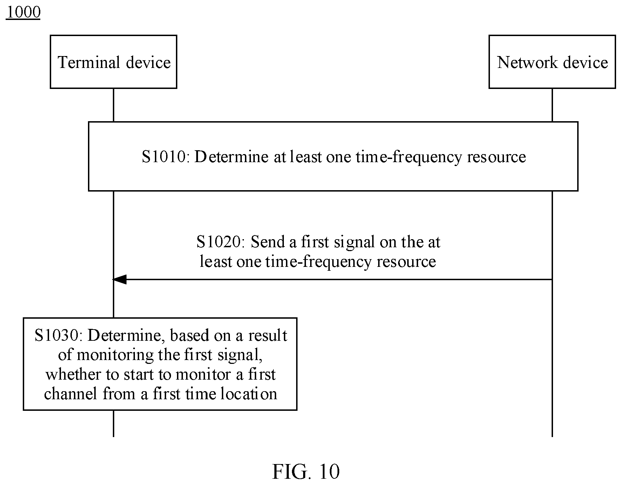

FIG. 10 is a schematic flowchart of a signal receiving method 1000 according to an embodiment of this application. The method 1000 may be applied to the terminal device 130 or the terminal device 140 in the wireless communications system 100. It should be understood that an example in which a terminal device and a network device are used to perform the method is used for description in this embodiment of this application. By way of example, and not limitation, the method may also be performed by a chip used in a terminal device and a chip used in a network device. As shown in FIG. 10, the method 1000 includes the following steps.

S1010: The terminal device determines at least one time-frequency resource. Correspondingly, the network device also determines the at least one time-frequency resource.

Specifically, the terminal device may determine the at least one time-frequency resource based on at least one first index number. The at least one first index number may be an index number of a control channel element (control channel element, CCE) in a first control resource set (control resource set, CORESET). The at least one first index number may be carried in higher layer signaling, or may be carried in physical layer signaling. In this embodiment of this application, the higher layer signaling may be radio resource control RRC signaling, or may be media access control MAC layer signaling. The physical layer signaling may be downlink control information DCI.

S1020: The network device sends a first signal on the at least one time-frequency resource. Correspondingly, the terminal device monitors the first signal on the at least one time-frequency resource. The at least one time-frequency resource is further used to carry a downlink control channel.

It should be understood that the first signal in this application may be a wake-up signal (WUS) or a go-to-sleep signal (go to sleep, GTS), or may be a "power saving signal" (power saving signal), or another signal having a similar function. The WUS is used to wake up the terminal device, so that the terminal device starts to monitor a PDCCH from a time location. The go-to-sleep signal is used to indicate the terminal device to enter a sleep mode, that is, a low power consumption mode. The terminal device may stop monitoring the PDCCH in a time period before detecting a next go-to-sleep signal. The power saving signal may be a general term of a wake-up signal and a go-to-sleep signal, or may have functions of both a wake-up signal and a go-to-sleep signal.

Optionally, the first signal is generated based on a first sequence. Specifically, the first signal may be generated based on a ZC sequence of a specific length, or may be generated based on a Gold sequence of a specific length, or may be generated based on a pseudo-random sequence of a specific length.

Optionally, the first signal may be obtained after channel coding, for example, Reed-Muller coding or Kerdock coding, or short transport format coding (transport format combination indicator, TFCI), is performed on source bits or information bits. It should be understood that this is not limited in this application.

Optionally, the first signal may alternatively be replaced with a first channel, for example, a downlink control channel. Optionally, the first signal may be a reference signal, for example, a demodulation reference signal DMRS, a CSI reference signal CSI-RS, or a tracking reference signal TRS.

Herein, channel coding processing may not be performed on the source bits. The first signal may carry some source bits or information bits, and may be used to indicate whether to wake up a terminal device or a group of terminal devices.

Optionally, the first signal has at least one structure, and first signals of different structures include different quantities of time-frequency units.

For example, it is predefined that the WUS includes six time-frequency resource elements. In other words, the WUS has a same time-frequency structure as a REG. Each time-frequency resource element is one OFDM symbol in time domain and one resource block in frequency domain.

In REs included in a time-frequency resource element, two, three, or four REs may be used to map a demodulation reference signal of the first signal, and remaining REs may be used to map modulation symbol data of the first signal. However, it should be noted that the time-frequency resource element of the WUS is not necessarily equivalent to the REG. For example, a quantity of demodulation reference signals included in the time-frequency resource element is not necessarily the same as a quantity of demodulation reference signals included in the REG.

Optionally, the first signal further includes a reference signal used to demodulate the first signal. The method further includes: demodulating/descrambling the reference signal based on a first identifier, where the first identifier is an identifier of the wake-up signal or the go-to-sleep signal.

In a possible implementation, the first identifier is configured by using the higher layer signaling.

S1030: The terminal device determines, based on a result of monitoring the first signal, whether to start to monitor the first channel from a first time location.

Herein, the first time location may be a start location of a corresponding DRX cycle, or a start location of "on duration" of a corresponding DRX cycle, or the first time location is a slot or a subframe in which a start location of a corresponding DRX cycle or "on duration" is located. The terminal device may start a first timer (the first timer may be a timer *drx-onDurationTimer*) or may start to monitor the first channel in the start slot or subframe (that is, the first time location). More generally, the first time location may be a start location of an active time period (active time) of a DRX cycle of the terminal device, and the active time period of the DRX cycle includes a time length of "on duration" or a time length of the first timer.

In this application, the first channel may be a PDCCH, or may be a data channel PDSCH. This is not limited in this embodiment of this application. In addition, the first channel may alternatively be replaced with a reference signal used for channel state information (channel state information, CSI) measurement or time-frequency tracking/synchronization or another signal.

For example, when the first signal is a WUS, the WUS is used to wake up the terminal device, and the terminal device that detects the WUS starts to monitor the PDCCH from the first time location. Specifically, with reference to the schematic diagram of FIG. 9, the terminal device receives the wake-up signal on the WUS occasion, and monitors the PDCCH in a time period highlighted in gray after a period of time.

The following specifically describes S1010 and S1020 by using an example. For ease of description, in description of subsequent embodiments, the WUS is used as an example for detailed description. This application includes but is not limited to this. It should be further understood that the embodiments of this application may be combined with each other.

Example 1:

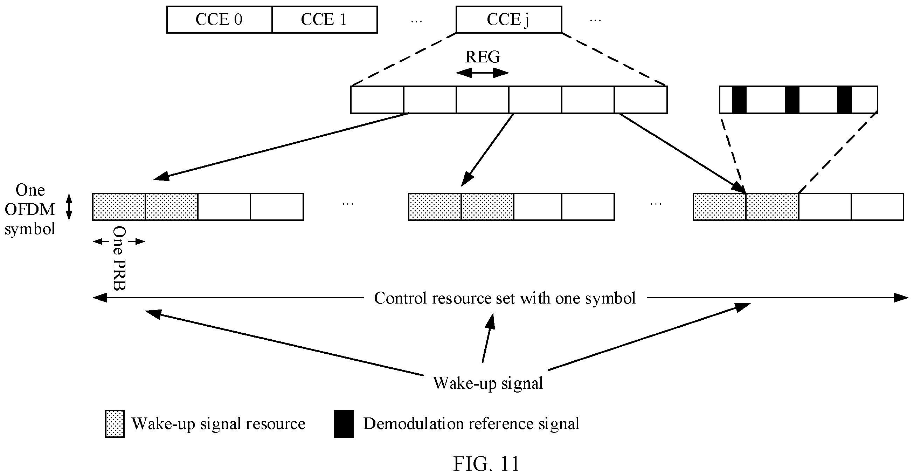

FIG. 11 is a schematic diagram of an example of a mapping relationship between a WUS resource and a CCE in a CORESET according to an embodiment of this application.

In S1010, the terminal device may determine the at least one time-frequency resource based on the at least one first index number, where each of the at least one first index number is the index number of the control channel element CCE in the first control resource set (CORESET). Correspondingly, the network device may also determine the at least one time-frequency resource based on the at least one first index number. For example, the terminal device may determine the at least one first index number and the first control resource set based on the higher layer signaling. Herein, the at least one first index number is directly carried in the higher layer signaling. For example, the terminal device may determine the CORESET by obtaining a CORESET index number or ID number that is associated with the WUS and that is carried in the higher layer signaling, and then determine, based on a CCE index number carried in the higher layer signaling, the CCE in the CORESET, to determine a resource on which a REG to which the CCE is mapped is located.

As an example instead of a limitation, a related parameter of the WUS may be configured for the terminal device by using the higher layer signaling. For example, the following related parameters may be included.

(1) CORESET index number or ID number that is associated with the WUS. Alternatively, a related parameter of the CORESET associated with the WUS may be configured, including a frequency domain position and a time domain length of the CORESET, a mapping type from a CCE to a REG, a REG bundle size value L, and the like. It should be understood that the terminal device and the network device herein may directly determine a downlink control resource set based on the CORESET index number or ID number included in information about the downlink control resource set. Alternatively, the terminal device and the network device may determine the CORESET index number based on parameter information such as the frequency domain position and the time domain length of the CORESET, the mapping type from a CCE to a REG, the REG bundle size value L, to determine a downlink control resource set.

(2) Start OFDM symbol location of the WUS in a slot. It should be understood that a time-frequency resource location of the WUS can be more accurately determined by configuring the start OFDM symbol location of the WUS in a slot.

(3) CCE index parameter $j$ associated with the WUS. In other words, a resource of the WUS in the CORESET is a resource in which a REG to which a CCE whose index is $j$ in the CORESET is mapped is located. It should be understood that the CCE index parameter $j$ associated with the WUS herein is a first index number. Optionally, a candidate CCE associated with the WUS may be preconfigured, for example, may be preconfigured as a CCE index 0. Alternatively, the network device may indicate a candidate CCE to the terminal device by using dynamic signaling (for example, DCI), or the candidate CCE is determined based on at least one of the foregoing parameters (1) and (2). A manner of determining the CCE index $j$ associated with the WUS is not limited in this embodiment of this application. Optionally, a plurality of CCE index parameters $j$ associated with the WUS may be configured, corresponding to different first index numbers.

(4) WUS number $n_{WUS\_ID}$. Different WUSs have different numbers.

It should be understood that, to fully use resources of a CORESET, different WUSs may be associated with a same CCE index number in a same CORESET, that is, a time-frequency resource in the same CORESET is shared. Therefore, when monitoring the WUS, the terminal device may detect another WUS at a same location, thereby generating a false alarm

Optionally, to prevent the terminal device from generating the false alarm due to detection of the another WUS, in a process of generating the WUS, the network device may scramble the detected WUS based on an identifier of the WUS, for example, the WUS number $n_{WUS\_ID}$. Correspondingly, the terminal device receives the WUS signal, and may descramble the detected WUS based on the identifier of the WUS, for example, the WUS number $n_{WUS\_ID}$. Alternatively, because the WUS is modulated symbol data, a DMRS used to demodulate the WUS may be scrambled by using the WUS number $n_{WUS\_ID}$, to avoid a false alarm. That is, an initialization parameter of a DMRS sequence of the WUS includes the WUS number $n_{WUS\_ID}$. For example, considering that there are at most 135 CCEs in the CORESET, the WUS number may be 8 bits, and a DMRS initialization formula of the WUS may be written as:

$$c_{init} = (2^{18}(14n_{s,f}^{\mu} + l + 1)(2^8 \cdot N_{ID}^{cell} + 1) + 2^8 \cdot N_{ID}^{cell} + n_{WUS\_ID}) \bmod 2^{31} \quad (1),$$

where $N_{ID}^{cell}$ is an ID number of a cell, 1 is an OFDM symbol number of a slot in which the WUS is located, and $n_{s,f}^{\mu}$ is a slot number in which the WUS is located.

In this application, the first identifier may be the identifier of the WUS or the WUS number $n_{WUS\_ID}$.

It should be understood that, according to the foregoing method, for different terminal devices, a wake-up signal can be accurately sent to a destination terminal device, and only the corresponding terminal device can obtain information about the wake-up signal, thereby avoiding a false alarm generated by another terminal device.

For the foregoing WUS, the terminal device determines the CORESET index number or ID number based on the information about the downlink control resource set, and further needs to determine a time-frequency resource for transmitting the WUS in time-frequency resources of the CORESET.

Optionally, that the terminal device determines at least one time-frequency resource includes: determining the at least one time-frequency resource based on a mapping manner from a control channel element CCE to a resource element group REG, where the mapping manner is interleaved mapping or non-interleaved mapping.

Optionally, if a time-frequency resource element forming the WUS has a same time-frequency structure as a REG, that is, each time-frequency resource element is one OFDM symbol in time domain and one physical resource block (PRB) in frequency domain, the terminal device may determine the time-frequency resource of the WUS in the CORESET based on the mapping manner (including the interleaved mapping or the non-interleaved mapping) from a control channel element CCE to a resource element group REG. In another aspect, the time-frequency resource of the WUS is a REG resource, in the CORESET, to which a CCE corresponding to the at least one first index number is mapped. Therefore, a time frequency position of the WUS in the CORESET may be determined based on a mapping relationship between a CCE, a REG bundle, and a REG.

The following describes a resource mapping manner of a downlink control channel in the CORESET, that is, a relationship between a CCE, a REG bundle, a REG, and the CORESET.

Before resource mapping, the network device needs to determine, in a search space of the terminal device, a CCE index for sending a PDCCH. Then, a corresponding physical resource is determined based on a correspondence between a CCE index and a REG bundle index. Based on different correspondences between CCE indexes and REG bundle indexes, the resource mapping is further classified into interleaved mapping (interleaved mapping) and non-interleaved mapping (non-interleaved mapping). Different mapping manners may be configured by using higher layer signaling. In the interleaved mapping mode, REGs to which CCEs are mapped may be scattered in the entire CORESET to further obtain frequency diversity gains. However, in the non-interleaved mapping mode, REGs to which CCEs are mapped may be aggregated in some time-frequency resources in the CORESET.

Before describing the correspondence between a CCE index and a REG bundle index, the REG bundle index needs to be defined. In descriptions of the embodiments of this application, the CCE index is denoted as *j*, and the REG bundle index is denoted as u. Specifically, REG index numbers corresponding to the REG bundle u are {uB, ..., uB + B - 1}, where the REG indexes are index numbers sorted in a time-domain-first order in the CORESET, and B is a quantity of REGs included in a REG bundle.

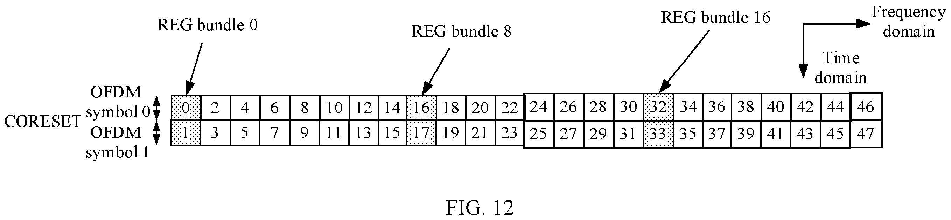

FIG. 12 is a schematic diagram of an example of a relationship between a REG bundle index and a REG index in a CORESET according to an embodiment of this application. As shown in FIG. 12, the CORESET includes two OFDM symbols in time domain and 48 PRBs in frequency domain. When B = 2, REG index numbers corresponding to a REG bundle 0 are {0, 1}, REG index numbers corresponding to a REG bundle 8 are {16, 17}, and REG index numbers corresponding to a REG bundle 16 are {32, 33}.

A correspondence between a CCE index and a REG bundle index is represented by a mapping function f(x), where REG bundle indexes corresponding to a CCE *j* are {f(6j/B), f(6j/B + 1), ..., f(6j/B + 6/B - 1)}. The mapping function f(x) is shown in Table 2.

**Table 2**

| Non-interleaved mapping | Interleaved mapping |
|---|---|
| f(x) = x | $f(x) = (rC + c + n_{shift}) \bmod (N_{REG}^{CORESET} / B)$ |

(continued)

| Non-interleaved mapping | Interleaved mapping |
|---|---|
| | $x = cR + r$<br>$r = 0, 1, ..., R\text{-}1$<br>$c = 0, 1, ..., C\text{-}1$<br>$C = N_{\text{REG}}^{\text{CORESET}} / (BR)$ |

R is a parameter configured by using higher layer signaling, and a value set is {2, 3, 6}. $n_{\text{shift}}$ is an offset parameter, and is used to implement inter-cell interference randomization. $N_{\text{REG}}^{\text{CORESET}}$ indicates a total quantity of REGs in the CORESET. In this way, the terminal device may obtain, based on a CCE index number of a detected PDCCH, locations of REG resources forming the PDCCH in the CORESET.

According to the foregoing steps, the CORESET index number or ID number that is associated with the WUS is first determined based on configuration information of the WUS, the CCE index number *j* is determined based on a configured first index number, then the REG bundle index u is determined based on the CCE index *j*, and finally a mapped time-frequency resource is determined based on the REG bundle index. In other words, the at least one time-frequency resource is determined.

The network device and the terminal device may determine, based on at least one parameter included in the information about the downlink control resource set configured in the foregoing steps, a resource on which the WUS is located. A determining method is as follows: A CCE index parameter associated with the WUS is *j*, and REG bundle indexes corresponding to the CCE *j* are {f(6j/B), f(6j/B + 1), ... + 6/B - 1)}, where B is a size of a REG bundle, and an expression of the f(x) function is determined based on the mapping type from a CCE to a REG. For details, see Table 2. For each REG bundle index *u,* corresponding REG index numbers are *{uB, ..., uB + B - 1}*. These REG resources are resources on which the WUS is located, and the network device and the terminal device may separately send and monitor the WUS on these resources.

According to the solutions provided in the foregoing embodiments, the WUS may be interleaved with a same mapping rule as that of a REG bundle, to obtain a frequency diversity gain and improve channel estimation performance. In addition, when the network device does not send the WUS, a downlink control channel may be sent on a corresponding WUS resource (at least one time-frequency resource), to implement sharing of the WUS and the downlink control channel, and improve resource utilization efficiency.

Example 2:

In S1010, the terminal device may determine the at least one time-frequency resource based on the at least one first index number, where the first index number is a CCE index number on a candidate downlink control channel in a search space set, and the CCE index number on the candidate downlink control channel in the search space set is a CCE index number in the first control resource set.

In a possible implementation, the first index number is an index number of a CCE whose number is i on a candidate downlink control channel whose aggregation level is L and whose number is m in the search space set, where $0 \le i \le L$ -1. In other words, for each candidate downlink control channel whose aggregation level is L, there are L CCEs in total, and numbers of the CCEs are 0 to L-1.

It should be noted that the CCE number i herein is different from the CCE index number *j.* The CCE index number *j* herein refers to an index number of the CCE in the CORESET, and the CCE number i refers to a number of the CCE on the candidate downlink control channel. A difference between a CCE number and a CCE index number in the following description of this application is consistent with the description herein.

For example, the terminal device may determine the aggregation level L, the number m of the candidate downlink control channel, and the number i of the CCE based on higher layer signaling, where the aggregation level L, the number m of the candidate downlink control channel, and the number i of the CCE are directly carried in the higher layer signaling; or determine the aggregation level L, the number m of the candidate downlink control channel, and the number i of the CCE based on a predefined value. For example, the terminal device may determine, by obtaining values of L, m, and i carried in the higher layer signaling, a resource on which a REG to which the CCE is mapped is located.

It should be understood that a PDCCH may support a plurality of aggregation levels. However, an aggregation level of the PDCCH sent by the network device to the terminal device cannot be obtained in advance by the terminal device. Therefore, the terminal device needs to perform blind detection on the PDCCH. According to the definition of the search space described above, the terminal device monitors the PDCCH at limited CCE locations, thereby avoiding an increase in complexity of blind detection.

In NR, to better control the complexity of blind detection, flexibility of configuring a search space is further improved. To be specific, an aggregation level, a quantity of candidate control channels corresponding to the aggregation level, and a detection cycle of the search space in time domain may all be configured by using a higher-layer parameter. The complexity of blind detection can be flexibly controlled based on these configuration information.

In NR, the network device may configure one or more search space sets for the terminal device, and each search space set includes search spaces at one or more aggregation levels. The configuration information of the search space set is shown in Table 3.

**Table 3 Control channel resource mapping parameter**

| Configuration parameter | Content |
|---|---|
| Search space set index | ID of a search space set |
| Control resource set index | CORESET associated with the search space set, where the associated CORESET determines a physical resource of the search space set |
| Search space set type | Common search space or terminal device-specific search space |
| Aggregation level value | Aggregation level information included in the search space set, where a value range is {1, 2, 4, 8, 16} |
| Quantity of candidate control channels | Quantity of candidate PDCCHs in search spaces corresponding to each aggregation level |
| Detection cycle | Time interval for monitoring the search space set, where the unit is slot |
| Slot offset | Slot offset between the start of the detection cycle and an actual search space set detection, where the offset is less than the value of the detection cycle |
| Quantity of slots | Quantity of slots for continuous monitoring the search space set, where the quantity of slots is less than the value of the detection cycle |
| Symbol location | Location of a start symbol of the CORESET associated with the search space set in each slot, where locations of two adjacent symbols are greater than or equal to a quantity of CORESET time-domain symbols |

Time domain configuration information of the search space set includes: the detection cycle, the slot offset, the quantity of slots, the symbol location, and the control resource set (CORESET) index. For ease of understanding, FIG. 6 is used as an example. The detection cycle is 10 slots, the slot offset is three slots, the quantity of slots is 2, the control resource set index corresponds to one CORESET that occupies two OFDM symbols, and symbol locations are an OFDM symbol 0 and an OFDM symbol 7 in a slot. In the foregoing example, the terminal device monitors the CORESET on the symbol 0 and the symbol 7 in a slot 3 and a slot 4 in each 10-slot cycle, and the CORESET occupies two OFDM symbols in time domain.

As an example instead of a limitation, a related parameter of the WUS may be configured for the terminal device by using the higher layer signaling. For example, the following related parameters may be included.

(1) Search space set (search space set) index number or ID number that is associated with the WUS, or related parameter of the search space set associated with the WUS, for example, the parameters listed in Table 3, that is, the parameter may include the CORESET associated with the search space set, the aggregation level value, the quantity of candidate control channels, the symbol location, and the like.

It should be understood that the terminal device and the network device herein may directly determine a downlink control resource set, namely, the first control resource set, based on the CORESET index number or ID number included in information about the search space set.

(2) Configuration parameters L, m, and i. The parameters L, m, and i have the following meaning: the first index number is an index number of a CCE whose number is i on a candidate downlink control channel whose aggregation level is L and whose number is m in the search space set.

Optionally, the parameter L may be predefined as 1, or may be a minimum aggregation level value in a search space set in which a quantity of candidate control channels is not 0.

Optionally, the parameter m may be predefined as 0.

Optionally, the parameter i may be predefined as 0.

Optionally, values of a plurality of parameters L, m, and i may be configured, to determine a plurality of first index numbers.

(3) Parameter $n_{RNTI}$ further needed to be configured if the search space set type is the UE-specific search space.

(4) WUS number $n_{WUS\_ID}$. Different WUSs have different numbers.

It should be understood that when monitoring the WUS, the terminal device may detect another WUS at a same location, thereby generating a false alarm. To prevent the terminal device from generating the false alarm due to detection of the another WUS, in a process of generating the WUS, the network device may scramble the detected WUS based on an identifier of the WUS, for example, the WUS number $n_{WUS\_ID}$. Correspondingly, the terminal device receives the WUS signal, and may descramble the detected WUS based on the identifier of the WUS, for example, the WUS number $n_{WUS\_ID}$. For details, refer to related descriptions in the foregoing method 1100. For brevity, details are not described herein again.

In NR, a CCE index of each candidate PDCCH in the CORESET is determined according to a given search space function. Specifically, it is determined, based on the control resource set index parameter in Table 3, that for a control resource set $p$ and a search space set s that are mutually associated, in a slot $n_{sf}^{\mu}$, a CCE index on the candidate control channel whose aggregation level is $L$ and whose number is $m_{s,n_{CI}}$ ($m_{s,n_{CI}}$ is equivalent to m that is described above) is given by:

$$j = L \cdot \left\{ \left( Y_{p,n_{s,f}^{\mu}} + \left\lfloor \frac{m \cdot N_{CCE,p}}{L \cdot M_{p,s,\max}^{(L)}} \right\rfloor + n_{CI} \right) \bmod \left\lfloor N_{CCE,p} / L \right\rfloor \right\} + i, i = 0, \cdots, L-1, (2)$$

In the foregoing formula (2), for the common search space, $Y_{p,n_{sf}^{\mu}} = 0;$ and for the terminal device-specific search space, $Y_{p,n_{s,f}^{\mu}} = (A_p \cdot Y_{p,n_{s,f}^{\mu}-1}) \bmod D$, $Y_{p,-1} = n_{RNTI} = 0$, and $D = 65537$.

When $p \bmod 3 = 0$, $A_0 = 3982'$.

When $p \bmod 3 = 1$, $A_1 = 39829$, and $p \bmod 3 = 2$, $A_2 = 39829$.

$N_{CCE,p}$ is a total quantity of CCEs included in the control resource set $p$, and CCEs are numbered from 0 to $N_{CCE,p}$ -1.

If a cross-carrier indicator is not configured, $n_{CI} = 0$; otherwise, $n_{CI}$ is a configured carrier indication parameter, to ensure that the candidate PDCCHs for scheduling different carriers occupy CCEs that do not overlap as much as possible. $m_{s,n_{CI}} = 0, \cdots, M_{p,s,n_{CI}}^{(L)} - 1$, where $M_{p,s,n_{CI}}^{(L)}$ is a quantity of configured candidate control channels whose aggregation level is $L$, serving cell is $n_{CI}$, and search space set is $s$, and may be determined by using the parameter of the quantity of candidate control channels in Table 3.

For the common search space, $M_{p,s,\max}^{(L)} = M_{p,s,0}^{(L)}$.

For the terminal device-specific search space, $M_{p,s,\max}^{(L)}$ is a maximum value in all value ranges of $n_{CI}$ at the aggregation level $L$ in the search space set $s$ in the control channel resource set $p$.

In addition, in the formula (2), i is a number of a CCE on the candidate downlink control channel.

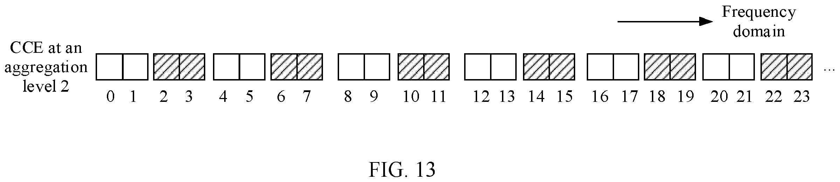

FIG. 13 shows a CCE index number of a candidate PDCCH at an aggregation level AL 2. Assuming that there are a total of 24 CCEs in a CORESET, and there are six candidate PDCCHs in a search space at the aggregation level AL 2, a CCE index number of each candidate PDCCH may be shown in FIG. 13. That is, a terminal device may monitor a PDCCH on a REG to which CCEs of the six candidate PDCCHs are mapped.

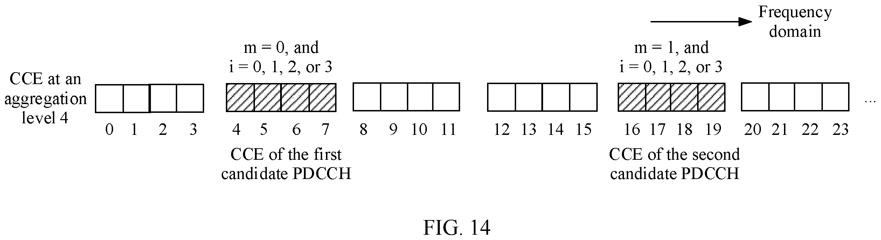

In conclusion, the network device and the terminal device may determine, based on the parameters configured in the foregoing steps, a resource on which the WUS is located. Values of the parameters $L, m,$ and i in the formula may be obtained based on a related WUS parameter configured for the terminal device by using the higher layer signaling, and then the first index number $j$ (that is, a corresponding CCE index number) is obtained according to the formula 2. FIG. 14 is a schematic diagram of determining, by using parameters $L, m,$ and $i,$ a CCE index number associated with a WUS. Assuming that there are a total of 24 CCEs in a CORESET associated with a search space set, and there are two candidate PDCCHs in a search space at an aggregation level AL 4, a CCE index number of each candidate PDCCH may be shown in FIG. 14.

If a value of the aggregation level $L$ is set to 4, a CCE index associated with the WUS is one of {4, 5, 6, 7, 16, 17, 18, 19}, and the CCE is one of CCEs corresponding to the two candidate PDCCHs.

Then, a candidate PDCCH to which the associated CCE index belongs is further determined by using a value of m. That is, if m = 0, the CCE index associated with the WUS is one of {4, 5, 6, 7}, and the CCE is a CCE of the first candidate PDCCH. If m = 1, the CCE index associated with the WUS is one of {16, 17, 18, 19}, and is a CCE of the second candidate PDCCH.

Finally, the CCE index associated with the WUS is finally determined by using a value of i. For example, when m = 0 and i = 2, the CCE index number $j$ associated with the WUS is equal to six.

In conclusion, with reference to the formula (2), the index number $j$ of a CCE used to transmit the WUS may be determined by using the configured parameters $L, m,$ and $i$. After the CCE index parameter $j$ associated with the WUS is determined, for other methods, refer to the process in Example 1, that is, the index number u of the REG bundle is further determined based on the index number $j$ of the CCE, and then the REG is determined.

A time domain position of the WUS in a slot may be directly determined based on a start location of the search space set in a slot, that is, determined by using a symbol location configuration parameter in Table 3. For example, the time domain location may be the first start symbol location configured for the parameter.

Optionally, the time domain position of the WUS in the slot may be further configured based on the higher layer signaling, for example, in a bitmap (bitmap) manner. Each bit represents one OFDM symbol in the slot. For example, the terminal device may determine the start symbol location by using a bit whose bit value is "1". A configuration of the start location of the search space set in the slot is not limited in this application.

According to the solutions provided in the foregoing embodiments, the WUS may be interleaved with a same mapping rule as that of a REG bundle, to obtain a frequency diversity gain and improve channel estimation performance. In addition, when the network device does not send the WUS, a downlink control channel may be sent on a corresponding WUS resource (at least one time-frequency resource), to implement sharing of the WUS and the downlink control channel, and improve resource utilization efficiency.

Example 3:

In S1010, the terminal device determines a plurality of candidate time-frequency resources. Correspondingly, the network device may also determine a plurality of candidate time-frequency resources.

In a possible implementation, the terminal device may have a plurality of candidate resources in the CORESET, the WUS needs to be monitored on the plurality of candidate resources, and each candidate resource is associated with one CCE index in the CORESET.

Specifically, the terminal device may determine the at least one first index number and the first control resource set based on the higher layer signaling, where the at least one first index number is directly carried in the higher layer signaling.

In a possible implementation, the at least one first index number includes index numbers of all CCEs on M candidate downlink control channels at at least one aggregation level in a search space set, and M is an integer not less than 1. The terminal device may determine the at least one time-frequency resource based on at least one aggregation level L and a number m of at least one candidate downlink control channel at each aggregation level that are carried in the higher layer signaling.

For example, for M candidate downlink control channels at an aggregation level L, a number of each candidate downlink control channel is m, where m is not less than $m_L$ and not greater than $m_L + M - 1$, and M and $m_L$ are directly carried or predefined in the higher layer signaling. A value of i may be obtained from 0 to L-1. The terminal device may determine, based on a set including the plurality of candidate resources and values of m and the aggregation level L corresponding to each parameter in the set, a resource on which a REG to which the CCE is mapped is located.

M should not be greater than a quantity of candidate downlink control channels whose aggregation level is L.

For another example, for M candidate downlink control channels at an aggregation level L, a number of each candidate downlink control channel may be separately configured by using the higher layer signaling.

In this case, as an example instead of a limitation, a related parameter of the WUS may be configured for the terminal device by using the higher layer signaling. For example, the following related parameters may be included.

(1) Search space set index number or ID number that is associated with the WUS, or related parameter of the search space set associated with the WUS, for example, the parameters listed in Table 3, including the CORESET associated with the search space set, the aggregation level L value, the quantity of candidate control channels, the symbol location, and the like.

(2) Candidate resource parameter $M_i^\alpha$ set of the WUS, and an $L_i$ value corresponding to each parameter $M_i^\alpha$ in the set. For example, $\{M_1^\alpha, M_2^\alpha\} = \{2,1\}$, where $M_1^\alpha$ corresponds to $L_1 = 1$, and $M_2^\alpha$ corresponds to $L_2 = 2$. Optionally, a parameter $L_i$ may be predefined as 1, or may be a minimum aggregation level value in a search space set in which a quantity of candidate control channels is not 0.

(3) $m_i^\alpha$ value corresponding to each parameter $M_i^\alpha$ in the candidate resource parameter set of the WUS. The value may be configured by using the higher layer signaling, or may be predefined by a system.

For example, the parameter $M_i^\alpha$ and the corresponding $m_i^\alpha$ value are both predefined as 0. $\{M_1^\alpha, M_2^\alpha\} = \{2,1\}$ is still used as an example, where $M_1^\alpha$ corresponds to $m_1^\alpha = 0$, and $M_2^\alpha$ corresponds to $m_2^\alpha = 0$.

(4) WUS number $n_{WUS\_ID}$. Different WUSs have different numbers.

Similarly, a WUS that is scrambled by using the WUS number $n_{WUS\_ID}$ can prevent the terminal device from generating a false alarm due to detection of another WUS. For details, refer to the descriptions in the foregoing method 1100 and method 1400. For brevity, details are not described herein again.

In the example, a meaning of $L_i$ is consistent with a meaning of the parameter L, and is an aggregation level. In this example, a plurality of aggregation levels can be configured. A meaning of $M_i^\alpha$ is consistent with a meaning of M, and is a quantity of candidate downlink control channels. A value of $m_i^\alpha$ is consistent with a meaning of the foregoing parameter $m_L$, and is used to determine a number of each candidate downlink control channel. It can be learned from this that the at least one first index number includes index numbers of all CCEs on $M_i^\alpha$ candidate downlink control channels whose aggregation level is $L_i$ in the search space set, numbers of the $M_i^\alpha$ candidate downlink control channels are $m_i^\alpha$ to $m_i^\alpha + M_i^\alpha - 1$, and a value of a CCE number i is from 0 to $L_i - 1$.

The terminal device determines each candidate resource of the WUS based on the foregoing configured parameters. A calculation formula of a CCE index parameter $j$ (that is, each first index number) associated with each WUS candidate resource is:

$$ j = L_i \cdot \left\{ \left( Y_{p,n_{s,f}^\mu} + \left\lfloor \frac{m \cdot N_{CCE,p}}{L_i \cdot M_{p,s,\max}^{(L)}} \right\rfloor + n_{CI} \right) \mod \left\lfloor N_{CCE,p} / L_i \right\rfloor \right\} + i \quad (3), $$

where $m_i = m_i^\alpha, \ldots, m_i^\alpha + M_i^\alpha - 1$, $i = 0, \ldots, L_i - 1$, and $m_i^\alpha$, $M_i^\alpha$, and $m_i^\alpha + M_i^\alpha - 1$ are not greater than $M_{p,s,n_{CI}}^{(L)} - 1$ and not less than 0.

In the formula, values of parameters $L_i$, $m_i^\alpha$, and $M_i^\alpha$ may be obtained based on configured specific parameter information, and $m_i$ is the number of the candidate downlink control channel, which is consistent with a meaning of the parameter m described above. i is a number of a CCE on the candidate downlink control channel. Meanings of other parameters are described in detail in Example 2. For brevity, details are not described herein again.

Optionally, an $m_i$ value herein may also be obtained based on the method described in Example 2.

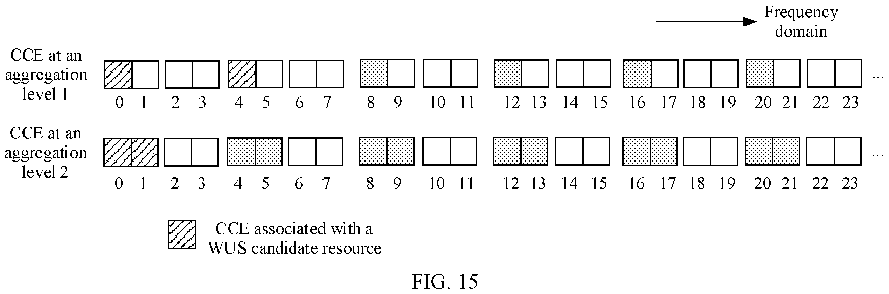

Assuming that there are a total of 24 CCEs in the CORESET associated with the search space set, and there are six candidate PDCCHs in search spaces at both an aggregation level AL 1 and an aggregation level AL 2. FIG. 15 is a schematic diagram of a CCE index associated with a candidate WUS resource. An example in which $\{M_1^\alpha, M_2^\alpha\} = \{2,1\}$, $L_1 = 1$, $L_2 = 2$, and $m_1^\alpha = m_2^\alpha = 0$ is still used in FIG. 15.

A value of $L_i$ indicates that a CCE associated with the candidate WUS resource is a CCE of a candidate PDCCH whose aggregation level is $L_i$, and a value of $M_i^\alpha$ indicates a quantity of associated candidate PDCCHs whose aggregation level is $L_i$, and is used to determine a quantity of CCEs associated with the candidate WUS resource, to control a quantity of times that a terminal device monitors a WUS. Finally, an index number of the associated candidate PDCCH whose aggregation level is $L_i$ is determined by using $m_i^\alpha$.

In FIG. 15, a filled block is the CCE of the candidate PDCCH. For $M_1^\alpha = 2$, $L_1 = 1$, and $m_1^\alpha = 0$, CCEs associated with the candidate WUS resources are CCEs of the first candidate PDCCH and the second candidate PDCCH in six candidate PDCCHs whose aggregation levels are 1, that is, CCEs whose index numbers are 0 and 4 shown by shadow filling.

For $M_2^\alpha = 1$, $L_2 = 2$, and $m_2^\alpha = 0$, CCEs associated with the candidate WUS resource are CCEs of the first candidate PDCCH in six candidate PDCCHs whose aggregation levels are 2, that is, CCEs whose index numbers are 0 and 1. Therefore, the WUS has three candidate locations, and the index numbers of the associated CCEs are 0, 1, and 4 respectively. A network device may select any one of the three candidate locations to send the WUS.

By using the foregoing process, after the terminal device and the network device may determine a CCE index parameter $j$ associated with each candidate resource of the WUS, for other methods, refer to the process in method Example 1. Then, the index number u of the REG bundle is further determined based on the index number $j$ of the CCE, and then the REG is determined. Specifically, Example 1 and Example 2 are described in detail. For brevity, details are not described herein again.

For Example 2 and Example 3, there are other methods that can be implemented.

In a possible implementation, in addition to the enumerated configuration information, another related parameter of the WUS may be configured for the terminal device by using the higher layer signaling. For example, the following related parameters may be included.

(1) Search space set index number or ID number that is associated with the WUS, or related parameter of the search space set associated with the WUS, for example, the parameters listed in Table 3, including the CORESET associated with the search space set, the aggregation level value, the quantity of candidate control channels, the symbol location, and the like.
A quantity of candidate PDCCHs at each aggregation level is $M_i$. For example, $\{M_1, M_2, M_4, M_8\} = \{6,6,2,1\}$ or $\{0,4,2,1\}$, where $M_1$ corresponds to an aggregation level AL 1, $M_2$ corresponds to an aggregation level AL 2, $M_4$ corresponds to an aggregation level AL 4, and $M_8$ corresponds to an aggregation level AL 8.
(2) An integer K greater than 1, for example, 2 or 3.
(3) WUS number $n_{WUS\_ID}$. Different WUSs have different numbers.

The terminal device determines each candidate resource of the WUS based on the foregoing enumerated configuration parameters. The terminal device may determine, based on the set including the plurality of candidate resources and values of m, i, and the aggregation level L corresponding to each candidate resource in the set, the resource on which the REG to which the CCE is mapped is located.

Optionally, first, the terminal device obtains the candidate resource parameter $M_i^\alpha$ of the WUS based on a value of the integer K: $M_i^\alpha = \lfloor M_i / K \rfloor$, where a meaning of the parameter $M_i^\alpha$ herein is consistent with a meaning of $M_i^\alpha$ in Example 3.

For example, for a set $\{M_1, M_2, M_4, M_8\}$ of a quantity $M_i$ of candidate PDCCHs at an aggregation level, the candidate resource parameter $M_i^\alpha$ set of the WUS is $\{M_1^\alpha, M_2^\alpha, M_4^\alpha, M_8^\alpha\} = \{\lfloor M_1 / K \rfloor, \lfloor M_2 / K \rfloor, \lfloor M_4 / K \rfloor, \lfloor M_8 / K \rfloor\}$. For example, when $\{M_1, M_2, M_4, M8\}$

= {6,6,2,1}, and K = 3, $\{M_1^{\alpha}, M_2^{\alpha}, M_4^{\alpha}, M_8^{\alpha}\} = \{2,2,0,0\}$. The integer K herein is equivalent to an "attenuation factor", and is used to control a quantity of times that UE monitors the WUS. In another aspect, if a total quantity of candidate downlink control channels whose aggregation level is $L_i$ is $M_i$, a quantity of candidate downlink control channels whose aggregation level is $L_i$ and that are associated with the WUS candidate resource is $M_i^{\alpha} = \lfloor M_i / K \rfloor$. In other words, the at least one first index number includes at least index numbers of all CCEs on $M_i^{\alpha}$ candidate downlink control channels whose aggregation levels are $L_i$ in the search space set. It should be understood that each parameter $M_i^{\alpha}$ corresponds to one $L_i$ value, where $M_1^{\alpha}$ corresponds to $L_1$ = 1, $M_2^{\alpha}$ corresponds to $L_2$ = 2, $M_4^{\alpha}$ corresponds to $L_4$ = 4 , and $M_8^{\alpha}$ corresponds to $L_8$ = 8 . A meaning of the parameter $L_i$ is consistent with a meaning of $L_i$ in Example 3.

Optionally, a value of $M_i^{\alpha}$ may also be $M_i^{\alpha} = \lceil M_i / K \rceil$.

In this case, the CCE index parameter *j* associated with each WUS candidate resource may be determined by using the following several methods.

Method 1

A value of $m_i^{\alpha}$ corresponding to each parameter $M_i^{\alpha}$ is predefined. For example, the value is set to 0, or may be directly configured by the network device. The method is the same as that in Embodiment 3.

Method 2

The parameter can be obtained by using the WUS number $n_{WUS\_ID}$.

For each non-zero value $M_i^{\alpha}$ and a corresponding $L_i$ value, the UE may calculate a corresponding $i = n_{WUS\_ID}$ mod$L_i$, and $k = n_{WUS\_ID}$ mod$K$. The calculation formula of the CCE index parameter *j* associated with each WUS candidate resource is:

$$j = L_i \cdot \{(Y_{p,n_{s,f}^{\mu}} + \lfloor \frac{m \cdot N_{CCE,p}}{L_i \cdot M_{p,s,\max}^{(L)}} \rfloor + n_{CI}) \mod \lfloor N_{CCE,p} / L_i \rfloor\} + i \quad (4),$$

where $m_i = k \cdot M_i^{\alpha}, \ldots, (k+1) \cdot M_i^{\alpha} - 1$, and a value of k is used to determine the number of the candidate downlink control channel.

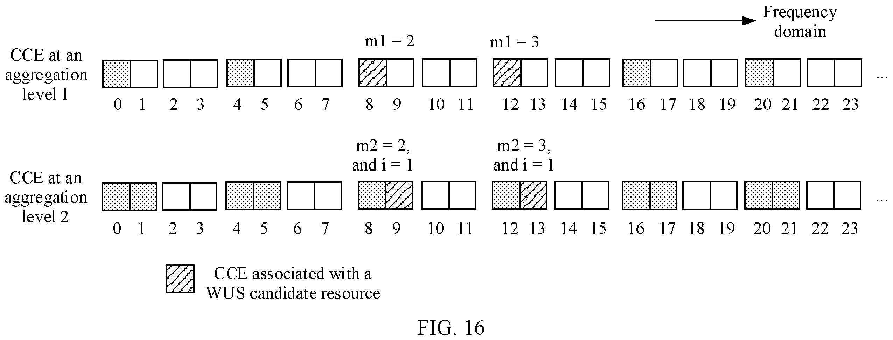

FIG. 15 is used as an example. When $\{M_1, M_2, M_4, M_8\}$ = $\{6,6,2,1\}$, and K = 3, $\{M_1^{\alpha}, M_2^{\alpha}, M_4^{\alpha}, M_8^{\alpha}\} = \{2,2,0,0\}$. If $n_{WUS\_ID}$=1 , for $M_1^{\alpha} = 2$ , $i = n_{WUS\_ID}$ mod$L_1$ =0, and $k = n_{WUS\_ID}$mod$K$=1, $m_1 = k \cdot M_1^{\alpha}, \ldots, (k+1) \cdot M_1^{\alpha} - 1 = 2,3$ . For $M_2^{\alpha} = 2$ , $i = n_{WUS\_ID}$mod$L_2$ =1, and $k = n_{WUS\_ID}$mod$K$=1, $m_2 = k \cdot M_2^{\alpha}, \ldots, (k+1) \cdot M_2^{\alpha} - 1 = 2,3$. In this case, a CCE index associated with each candidate WUS resource is shown in FIG. 16, that is, values of M and i at each aggregation level L in Example 2 are obtained by using the parameter K and $n_{WUS\_ID}$.

After the CCE index parameter *j* associated with each WUS candidate resource is determined, for other methods, refer to the foregoing steps after the index *j* of the CCE is determined. For brevity, details are not described herein again.

Example 4:

In S1020, the first signal may have at least one structure, and first signals of different structures include different quantities of time-frequency units.

In the foregoing three examples, the first signal may have only one structure. For example, the first signal includes six time-frequency resource elements. However, the present invention is not limited thereto, and the first signal in the foregoing three examples may also have a plurality of structures.

A WUS of each structure may include different quantities of time-frequency resource elements. In an example, for fully sharing of a control channel resource, a quantity of time-frequency resource elements included in each WUS structure is equal to a quantity of REGs of a PDCCH at an aggregation level. Therefore, quantities of time-frequency resource elements included in different WUS structures may be 6, 12, 24, or 48, respectively corresponding to PDCCHs whose aggregation levels are 1, 2, 4, or 8.

As an example instead of a limitation, the WUS may have two structures: a structure 1 and a structure 2. A WUS of the structure 1 includes six time-frequency resource elements, a WUS of the structure 2 includes 12 time-frequency resource elements, and each time-frequency resource element is one OFDM symbol in time domain, and is one resource block in frequency domain. In other words, the WUS may have the same time-frequency structure as the REG.

The network device may dynamically adjust the structure of a to-be-sent WUS based on a status of an actually transmitted radio channel and a coverage requirement of the WUS, to implement link adaptation transmission. Generally, in this case, the terminal device does not know the structure of the WUS sent by the network device. Therefore, the terminal device needs to monitor WUSs of different structures. The structure of the WUS may be indicated to the terminal device by using a configuration parameter or by sending indication information to the terminal device by the network device.

In a possible implementation, for the first signals of different structures, the terminal device may determine at least one second index number from the at least one first index number based on each structure of the first signal; and determine the at least one time-frequency resource based on the at least one second index number. The terminal device monitors a first signal of the structure on the at least one time-frequency resource. In other words, the first signals of different structures correspond to different index numbers, and the terminal device monitors the first signal of the structure on a time-frequency resource determined based on an index number corresponding to a first signal of each structure.

Optionally, the at least one second index number that is determined by the terminal device based on each structure of the first signal includes index numbers of all CCEs on at least one candidate downlink control channel at at least one aggregation level in the search space set, and at least one second index number that is determined by the terminal device based on different structures of the first signal belongs to an index number of a CCE on at least one candidate downlink control channel at different aggregation levels in the search space set.

Optionally, the network device may configure parameters $L_i$ and $M_i^\alpha$ for the terminal device. The parameters $L_i$ and $M_i^\alpha$ may be determined based on the methods (including the methods in Example 2 and Example 3) described above. Each parameter $L_i$ may correspond to a structure of a WUS that needs to be monitored by the terminal device, and different parameters $L_i$ correspond to different WUS structures. $M_i^\alpha$ may represent a quantity of candidate WUSs of the structure. The terminal device may determine the structure of the to-be-detected WUS signal based on the configuration parameter. In this case, the at least one second index number determined based on each WUS structure includes index numbers of all CCEs on $M_i^\alpha$ candidate downlink control channels whose aggregation levels are $L_i$ in a search space. To be specific, the at least one second index number determined based on each of the different WUS structures belongs to index numbers of CCEs on $M_i^\alpha$ candidate downlink control channels at a different aggregation level $L_i$ in the search space set. Specifically, $L_1 = 1$ corresponds to the WUS of the structure 1, the WUS of the structure 1 indicates that the WUS may include six time-frequency resource elements. $M_1^\alpha = 2$ indicates that there are two WUSs of the structure 1 in the candidate WUSs. For the parameters $L_i$ and $M_i^\alpha$ that are of each WUS structure, a second index number may be determined according to the formula 3, and a value of $m_i$ in the formula 3 may be directly determined based on the foregoing methods (including the methods in Example 2 and Example 3). Specifically, FIG.

16 is used as an example for description. For $M_1^\alpha = 2$, $L_1 = 1$, and $m_1^\alpha = 0$, there are two candidate WUSs of the structure 1, and associated CCE index numbers are 0 and 4 respectively.

For $M_2^\alpha = 1$, $L_2 = 2$, and $m_2^\alpha = 0$, there is one candidate WUS of the structure 2, and associated CCE index numbers are 0 and 1.

After the CCE index parameter $j$ associated with each candidate WUS of each WUS structure is determined, for other methods, refer to the foregoing steps after the index $j$ of the CCE is determined. For brevity, details are not described herein again.

According to the foregoing technical solutions, the network device may dynamically select to send WUSs of different structures, to flexibly meet the coverage requirement of the WUS and ensure transmission reliability of the WUS.

According to the wake-up signal transmission method described above, the WUS can be mapped with interleaving to obtain a frequency diversity gain, and improve channel estimation performance. In addition, a resource of a control channel in a CORESET and a resource mapping rule are shared, which facilitates backward compatibility and reduces standardization difficulty. When the network device does not send the WUS, the control channel may be sent on a corresponding WUS resource, thereby improving resource utilization efficiency. In addition, the network device may dynamically select to send WUSs of different structures, to flexibly meet the coverage requirement of the WUS and ensure the transmission reliability of the WUS.

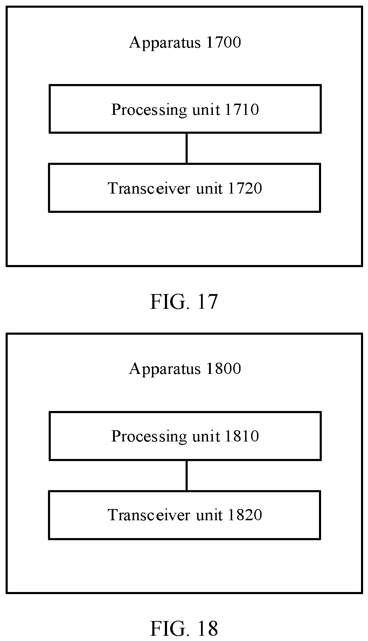

The foregoing describes in detail the wake-up signal transmission method in the embodiments of this application with reference to FIG. 1 to FIG. 16. The following describes in detail a wake-up signal transmission apparatus in the embodiments of this application with reference to FIG. 17 to FIG. 20.

FIG. 17 is a schematic block diagram of a wake-up signal transmission apparatus 1700 according to an embodiment of this application. The apparatus 1700 may correspond to the terminal device described in the method 1000, or may be a chip or a component used in the terminal device. Modules or units in the apparatus 1700 are configured to perform actions or processing processes performed by the terminal device in the foregoing method 1000. As shown in FIG. 17, the communications apparatus 1700 may include a processing unit 1710 and a transceiver unit 1717.

The processing unit 1710 is configured to determine at least one time-frequency resource.

The processing unit 1710 is further configured to control the transceiver unit to monitor a first signal on the at least one time-frequency resource, where the at least one time-frequency resource is further used to carry a downlink control channel.

The processing unit 1710 is further configured to determine, based on a result of monitoring the first signal, whether to start to monitor a first channel from a first time location.

Specifically, the processing unit 1710 is configured to perform S1010 and S1030 in the method 1000, and the transceiver unit 1720 is configured to perform S1020 in the method 1000. A specific process of performing the foregoing corresponding steps by each unit is described in detail in the method 1000. For brevity, details are not described herein again.

FIG. 18 is a schematic block diagram of a wake-up signal transmission apparatus 1800 according to an embodiment of this application. The apparatus 1800 may correspond to (for example, may be used in or may be) the network device (for example, a base station) described in the method 400. Modules or units in the apparatus 1800 are respectively configured to perform actions or processing processes performed by the network device in the method 400. As shown in FIG. 18, the communications apparatus 1800 may include a processing unit 1810 and a transceiver unit 1820.

The processing unit 1810 is configured to determine at least one time-frequency resource.

The transceiver unit 1820 is configured to send a first signal on the at least one time-frequency resource, where the at least one time-frequency resource is further used to carry a downlink control channel.

Specifically, the processing unit 1810 is configured to perform S1010 in the method 1000, and the transceiver unit 1820 is configured to perform S1020 in the method 1000. A specific process of performing the foregoing corresponding steps by each unit is described in detail in the method 1000. For brevity, details are not described herein again.

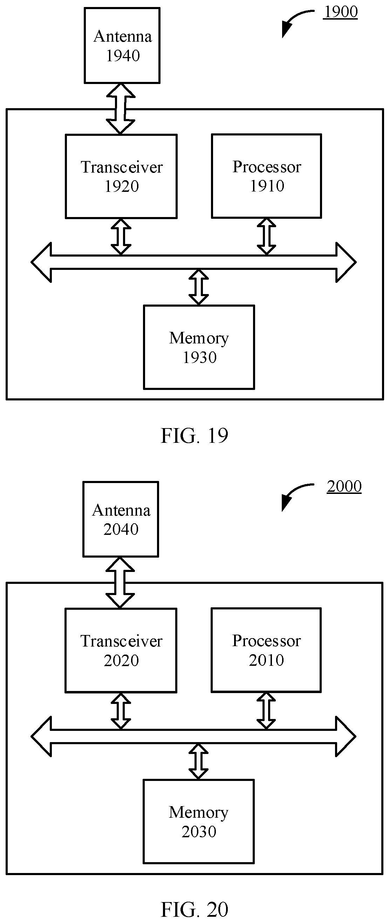

FIG. 19 is a schematic structural diagram of a terminal device 1900 according to an embodiment of this application. As shown in FIG. 19, the terminal device 1900 includes a processor 1910 and a transceiver 1920. Optionally, the terminal device 1900 further includes a memory 1930. The processor 1910, the transceiver 1920, and the memory 1930 communicate with each other through an internal connection path, to transfer a control signal and/or a data signal The memory 1930 is configured to store a computer program. The processor 1910 is configured to invoke the computer program from the memory 1930 and run the computer program, to control the transceiver 1920 to send or receive a signal.

The processor 1910 and the memory 1930 may be integrated into one processing apparatus. The processor 1910 is configured to execute program code stored in the memory 1930, to implement functions of the terminal device in the foregoing method embodiment. During specific implementation, the memory 1930 may also be integrated into the processor 1910, or may be independent of the processor 1910. The transceiver 1920 may be implemented by using a transceiver circuit.

The terminal device may further include an antenna 1940, configured to: send, by using a radio signal, uplink data or uplink control signaling that is output by the transceiver 1920; or receive downlink data or downlink control signaling before sending the downlink data or the downlink control signaling to the transceiver 1920 for further processing.

It should be understood that the apparatus 1900 may correspond to the terminal device in the method 1000 according to the embodiments of this application, or the apparatus 1900 may be a chip or a component used in the terminal device. In addition, each module in the apparatus 1900 implements a corresponding procedure in the method 1000. Specifically, the memory 1930 is configured to store program code, so that when executing the program code, the processor 1910 is controlled to perform S1010 and S1030 in the method 1000, and the transceiver 1920 is controlled to perform S1020 in the method 1000. A specific process of performing the foregoing corresponding steps by each unit is described in detail in the method 1000. For brevity, details are not described herein again.

FIG. 20 is a schematic structural diagram of a network device 2000 according to an embodiment of this application. As shown in FIG. 20, the network device 2000 (for example, a network device) includes a processor 2010 and a transceiver 2020. Optionally, the network device 2000 further includes a memory 2030. The processor 2010, the transceiver 2020, and the memory 2030 communicate with each other through an internal connection path, to transfer a control signal and/or a data signal. The memory 2030 is configured to store a computer program. The processor 2010 is configured to invoke the computer program from the memory 2030 and run the computer program, to control the transceiver 2020 to send or receive a signal.

The processor 2010 and the memory 2030 may be integrated into one processing apparatus. The processor 2010 is configured to execute program code stored in the memory 2030, to implement functions of the network device in the foregoing method embodiment. During specific implementation, the memory 2030 may also be integrated into the processor 2010, or may be independent of the processor 2010. The transceiver 2020 may be implemented by using a transceiver circuit.

The network device may further include an antenna 2040, configured to: send, by using a radio signal, downlink data or downlink control signaling that is output by the transceiver 2020; or receive uplink data or uplink control signaling before sending the uplink data or the uplink control signaling to the transceiver 820 for further processing.

It should be understood that the apparatus 2000 may correspond to the network device in the method 1000 according to the embodiments of this application, or the apparatus 2000 may be a chip or a component used in the network device. In addition, each module in the apparatus 2000 implements a corresponding procedure in the method 1000. Specifically, the memory 2030 is configured to store program code, so that when executing the program code, the processor 2010 is controlled to perform S1010 in the method 1000, and the transceiver 2020 is controlled to perform S1020 in the method 1000. A specific process of performing the foregoing corresponding steps by each unit is described in detail in the method 1000. For brevity, details are not described herein again.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiment. Details are not described herein again.

In the several embodiments provided in this application, it should be understood that the disclosed system, apparatus, and method may be implemented in another manner. For example, the described apparatus embodiment is merely an example. For example, the unit division is merely logical function division and there may be another division in actual implementation. For example, a plurality of units or components may be combined. In addition, the displayed or discussed mutual coupling or communication connection may be an indirect coupling or a communication connection through some interfaces, apparatuses, or units.

In addition, functional units in the embodiments of this application may be integrated into one physical entity, or each of the units separately corresponds to one physical entity, or two or more units are integrated into one physical entity. When the functions are implemented in a form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the method described in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

**Claims**

1.  A signal receiving method, comprising:

    determining at least one time-frequency resource;
    monitoring a first signal on the at least one time-frequency resource, wherein the at least one time-frequency resource is further used to carry a downlink control channel; and
    determining, based on a result of monitoring the first signal, whether to start to monitor a first channel from a first time location.

2.  The method according to claim 1, wherein the first signal is generated based on a first sequence.

3.  The method according to claim 1 or 2, wherein the determining at least one time-frequency resource comprises:
    determining the at least one time-frequency resource based on at least one first index number, wherein each of the at least one first index number is an index number of a control channel element CCE in a first control resource set.

4.  The method according to claim 3, wherein the method further comprises:
    determining the at least one first index number and the first control resource set based on higher layer signaling, wherein the at least one first index number is directly carried in the higher layer signaling.

5.  The method according to claim 3, wherein the first index number is a CCE index number on a candidate downlink control channel in a search space set, and the CCE index number on the candidate downlink control channel in the search space set is a CCE index number in the first control resource set.

6.  The method according to claim 5, wherein the first index number is an index number of a CCE whose number is i on a candidate downlink control channel whose aggregation level is L and whose number is m in the search space set, wherein $0 \leq i \leq L - 1$.

7.  The method according to claim 6, wherein the method further comprises:

    determining the aggregation level L, the number m of the candidate downlink control channel, and the number i of the CCE based on higher layer signaling, wherein the aggregation level L, the number m of the candidate downlink control channel, and the number i of the CCE are directly carried in the higher layer signaling; or
    determining the aggregation level L, the number m of the candidate downlink control channel, and the number i of the CCE based on a predefined value.

8.  The method according to any one of claims 2 to 7, wherein the at least one first index number comprises index numbers of all CCEs on at least one candidate downlink control channel at at least one aggregation level in the search space set.

9.  The method according to any one of claims 2 to 8, wherein the first signal has at least one structure, and first signals of different structures comprise different quantities of time-frequency units;
    the determining the at least one time-frequency resource based on at least one first index number comprises:

    determining at least one second index number in the at least one first index number based on each structure of the first signal; and
    determining the at least one time-frequency resource based on the at least one second index number; and
    the monitoring a first signal on the at least one time-frequency resource comprises:
    monitoring a first signal of the structure on the at least one time-frequency resource.

10. The method according to claim 9, wherein the at least one second index number that is determined based on each structure of the first signal comprises the index numbers of all the CCEs on the at least one candidate downlink control channel at the at least one aggregation level in the search space set; and the at least one second index number that is determined based on different structures of the first signal belongs to an index number of a CCE on at least one candidate downlink control channel at different aggregation levels in the search space set.

**11.** A signal sending method, comprising:

determining at least one time-frequency resource; and
sending a first signal on the at least one time-frequency resource, wherein the at least one time-frequency resource is further used to carry a downlink control channel.

**12.** The method according to claim 11, wherein the first signal is generated based on a first sequence.

**13.** The method according to claim 11 or 12, wherein the determining at least one time-frequency resource comprises: determining the at least one time-frequency resource based on at least one first index number, wherein each of the at least one first index number is an index number of a control channel element CCE in a first control resource set.

**14.** The method according to claim 13, wherein the method further comprises:

determining the at least one first index number and the first control resource set, wherein the at least one first index number is directly carried in higher layer signaling; and
sending the higher layer signaling.

**15.** The method according to claim 13, wherein the first index number is a CCE index number on a candidate downlink control channel in a search space set, and the CCE index number on the candidate downlink control channel in the search space set is a CCE index number in the first control resource set.

**16.** The method according to claim 15, wherein the first index number is an index number of a CCE whose number is i on a candidate downlink control channel whose aggregation level is L and whose number is m in the search space set, wherein $0 \leq i \leq L - 1$.

**17.** The method according to claim 16, wherein the method further comprises:

determining the aggregation level L, the number m of the candidate downlink control channel, and the number i of the CCE, wherein the aggregation level L, the number m of the candidate downlink control channel, and the number i of the CCE are directly carried in higher layer signaling; and
sending the higher layer signaling; or
determining the aggregation level L, the number m of the candidate downlink control channel, and the number i of the CCE based on a predefined value.

**18.** The method according to any one of claims 12 to 17, wherein the at least one first index number comprises index numbers of all CCEs on at least one candidate downlink control channel at at least one aggregation level in the search space set.

**19.** The method according to any one of claims 12 to 18, wherein the first signal has at least one structure, and first signals of different structures comprise different quantities of time-frequency units;
the determining the at least one time-frequency resource based on at least one first index number comprises:

determining at least one second index number in the at least one first index number based on each structure of the first signal; and
determining the at least one time-frequency resource based on the at least one second index number; and
the sending a first signal on the at least one time-frequency resource comprises:
sending a first signal of the structure on the at least one time-frequency resource.

**20.** The method according to claim 19, wherein the at least one second index number that is determined based on each structure of the first signal comprises the index numbers of all the CCEs on the at least one candidate downlink control channel at the at least one aggregation level in the search space set; and the at least one second index number that is determined based on different structures of the first signal belongs to an index number of a CCE on at least one candidate downlink control channel at different aggregation levels in the search space set.

**21.** A signal receiving apparatus, comprising a processing unit and a transceiver unit, wherein the processing unit is configured to:

determine at least one time-frequency resource;

control the transceiver unit to monitor a first signal on the at least one time-frequency resource, wherein the at least one time-frequency resource is further used to carry a downlink control channel; and

determine, based on a result of monitoring the first signal, whether to start to monitor a first channel from a first time location.

22. The apparatus according to claim 21, wherein the first signal is generated based on a first sequence.

23. The apparatus according to claim 21 or 22, wherein the processing unit is further configured to:
determine the at least one time-frequency resource based on at least one first index number, wherein each of the at least one first index number is an index number of a control channel element CCE in a first control resource set.

24. The apparatus according to claim 23, wherein the processing unit is further configured to:
determine the at least one first index number and the first control resource set based on higher layer signaling, wherein the at least one first index number is directly carried in the higher layer signaling.

25. The apparatus according to claim 23, wherein the first index number is a CCE index number on a candidate downlink control channel in a search space set, and the CCE index number on the candidate downlink control channel in the search space set is a CCE index number in the first control resource set.

26. The apparatus according to claim 25, wherein the first index number is an index number of a CCE whose number is i on a candidate downlink control channel whose aggregation level is L and whose number is m in the search space set, wherein $0 \leq i \leq L - 1$.

27. The apparatus according to claim 26, wherein the processing unit is further configured to:

determine the aggregation level L, the number m of the candidate downlink control channel, and the number i of the CCE based on higher layer signaling, wherein the aggregation level L, the number m of the candidate downlink control channel, and the number i of the CCE are directly carried in the higher layer signaling; or
determine the aggregation level L, the number m of the candidate downlink control channel, and the number i of the CCE based on a predefined value.

28. The apparatus according to any one of claims 22 to 27, wherein the at least one first index number comprises index numbers of all CCEs on at least one candidate downlink control channel at at least one aggregation level in the search space set.

29. The apparatus according to any one of claims 22 to 28, wherein the first signal has at least one structure, and first signals of different structures comprise different quantities of time-frequency units; and
the processing unit is further configured to:

determine at least one second index number in the at least one first index number based on each structure of the first signal;
determine the at least one time-frequency resource based on the at least one second index number; and
monitor a first signal of the structure on the at least one time-frequency resource.

30. The apparatus according to claim 29, wherein the at least one second index number that is determined based on each structure of the first signal comprises the index numbers of all the CCEs on the at least one candidate downlink control channel at the at least one aggregation level in the search space set; and the at least one second index number that is determined based on different structures of the first signal belongs to an index number of a CCE on at least one candidate downlink control channel at different aggregation levels in the search space set.

31. A signal sending apparatus, comprising a processing unit and a transceiver unit, wherein the processing unit is configured to:

determine at least one time-frequency resource; and
the transceiver unit is configured to send a first signal on the at least one time-frequency resource, wherein the at least one time-frequency resource is further used to carry a downlink control channel.

**32.** The apparatus according to claim 31, wherein the first signal is generated based on a first sequence.

**33.** The apparatus according to claim 31 or 32, wherein the processing unit is further configured to:
determine the at least one time-frequency resource based on at least one first index number, wherein each of the at least one first index number is an index number of a control channel element CCE in a first control resource set.

**34.** The apparatus according to claim 33, wherein the processing unit is further configured to:

determine the at least one first index number and the first control resource set, wherein the at least one first index number is directly carried in higher layer signaling; and
the transceiver unit is further configured to send the higher layer signaling.

**35.** The apparatus according to claim 33, wherein the first index number is a CCE index number on a candidate downlink control channel in a search space set, and the CCE index number on the candidate downlink control channel in the search space set is a CCE index number in the first control resource set.

**36.** The apparatus according to claim 35, wherein the first index number is an index number of a CCE whose number is i on a candidate downlink control channel whose aggregation level is L and whose number is m in the search space set, wherein $0 \leq i \leq L$ -1.

**37.** The apparatus according to claim 36, wherein the processing unit is further configured to:

determine the aggregation level L, the number m of the candidate downlink control channel, and the number i of the CCE, wherein the aggregation level L, the number m of the candidate downlink control channel, and the number i of the CCE are directly carried in higher layer signaling; and
the transceiver unit is further configured to send the higher layer; or
the processing unit is further configured to determine the aggregation level L, the number m of the candidate downlink control channel, and the number i of the CCE based on a predefined value.

**38.** The apparatus according to any one of claims 32 to 37, wherein the at least one first index number comprises index numbers of all CCEs on at least one candidate downlink control channel at at least one aggregation level in the search space set.

**39.** The apparatus according to any one of claims 32 to 38, wherein the first signal has at least one structure, and first signals of different structures comprise different quantities of time-frequency units;
the processing unit is further configured to:

determine at least one second index number in the at least one first index number based on each structure of the first signal; and
determine the at least one time-frequency resource based on the at least one second index number; and
the transceiver unit is configured to:
send a first signal of the structure on the at least one time-frequency resource.

**40.** The apparatus according to claim 39, wherein the at least one second index number that is determined based on each structure of the first signal comprises the index numbers of all the CCEs on the at least one candidate downlink control channel at the at least one aggregation level in the search space set; and the at least one second index number that is determined based on different structures of the first signal belongs to an index number of a CCE on at least one candidate downlink control channel at different aggregation levels in the search space set.

**41.** A computer-readable storage medium, wherein the computer-readable storage medium stores a computer program; and when the computer program is executed, the method according to any one of claims 1 to 20 is implemented.

Terminal device 130

Core network
device 110

Radio access
network device 120

Terminal device 140

FIG. 1

FIG. 2

PDCCH demodulation reference signal

Frequency
domain

REG

0  1  2  3  4  5  6  7  8  9  10  11

FIG. 3

FIG. 4

EP 3 866 539 A1

Frequency domain

Time domain

REG bundle = 6

REG bundle = 2

CORESET with
one symbol

REG bundle = 6

REG bundle = 2

CORESET with
two symbols

REG bundle = 6

REG bundle = 3

CORESET with
three symbols

REG

FIG. 5

Detection cycle

Detection cycle

Slot
offset

Quantity
of slots

Slot
index     0  1  2  3  4  5  6  7  8  9  10   0  1  2  3  4  5  6  7  8  9  10

Time
domain

0        7

FIG. 6

FIG. 7

FIG. 8

EP 3 866 539 A1

FIG. 9

Discontinuous reception (DRX) cycle

WUS offset

WUS/DTX

WUS occasion

UE does not monitor a PDCCH

Active time period

WUS/DTX

WUS occasion

A terminal device monitors a PDCCH

State

WUS/DTX

Time domain

WUS/DTX

Data and control channel processing

The terminal device monitors the PDCCH

1000

FIG. 10

FIG. 11

EP 3 866 539 A1

REG bundle 0      REG bundle 8      REG bundle 16

Frequency domain

Time domain

OFDM symbol 0

CORESET

OFDM symbol 1

| 0 | 2 | 4 | 6 | 8 | 10 | 12 | 14 | 16 | 18 | 20 | 22 | 24 | 26 | 28 | 30 | 32 | 34 | 36 | 38 | 40 | 42 | 44 | 46 |
| 1 | 3 | 5 | 7 | 9 | 11 | 13 | 15 | 17 | 19 | 21 | 23 | 25 | 27 | 29 | 31 | 33 | 35 | 37 | 39 | 41 | 43 | 45 | 47 |

FIG. 12

CCE at an aggregation level 2

Frequency domain

0 1 2 3 4 5 6 7 8 9 10 11 12 13 14 15 16 17 18 19 20 21 22 23 ...

FIG. 13

FIG. 14

FIG. 15

Frequency domain

m1 = 2    m1 = 3

CCE at an aggregation level 1

0 1  2 3  4 5  6 7  8 9  10 11  12 13  14 15  16 17  18 19  20 21  22 23  ...

m2 = 2, and i = 1    m2 = 3, and i = 1

CCE at an aggregation level 2

0 1  2 3  4 5  6 7  8 9  10 11  12 13  14 15  16 17  18 19  20 21  22 23  ...

CCE associated with a WUS candidate resource

FIG. 16

FIG. 17

FIG. 18

FIG. 19

FIG. 20

## INTERNATIONAL SEARCH REPORT

| | International application No. |
|---|---|
| | **PCT/CN2019/116442** |

**A.    CLASSIFICATION OF SUBJECT MATTER**

H04W 72/04(2009.01)i

According to International Patent Classification (IPC) or to both national classification and IPC

**B.    FIELDS SEARCHED**

Minimum documentation searched (classification system followed by classification symbols)

H04W H04L H04Q

Documentation searched other than minimum documentation to the extent that such documents are included in the fields searched

Electronic data base consulted during the international search (name of data base and, where practicable, search terms used)

CNPAT, CNKI, WPI, EPODOC, 3GPP: 下行物理控制信道 下行控制信道 休眠 睡眠 唤醒 信号 新的 信道 检测 索引 时频 资源 时间 PDCCH WUS CCE sleep downlink control channel sleep wake signal new channel detect index indication time frequency resource time

**C.    DOCUMENTS CONSIDERED TO BE RELEVANT**

| Category* | Citation of document, with indication, where appropriate, of the relevant passages | Relevant to claim No. |
|---|---|---|
| X | QUALCOMM INCORPORATION. "Triggering Adaptation of UE Power Consumption Characteristics" *3GPP TSG-RAN WG1 Meeting #94bis R1-1811283*, 12 October 2018 (2018-10-12), sections 2.1.1 and 2.1.2, and figure 2 | 1-41 |
| A | CN 105472535 A (ALCATEL-LUCENT SHANGHAI BELL CO., LTD.) 06 April 2016 (2016-04-06) entire document | 1-41 |
| A | CN 103368763 A (HUAWEI TECHNOLOGIES CO., LTD.) 23 October 2013 (2013-10-23) entire document | 1-41 |
| A | WO 2018174635 A1 (LG ELECTRONICS INC.) 27 September 2018 (2018-09-27) entire document | 1-41 |

☐ Further documents are listed in the continuation of Box C.       ☑ See patent family annex.

| \* | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 January 2020** | **01 February 2020** |

| Name and mailing address of the ISA/CN | Authorized officer |
|---|---|
| **China National Intellectual Property Administration (ISA/ CN)** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/116442**

| Patent document cited in search report | | | Publication date (day/month/year) | Patent family member(s) | | | Publication date (day/month/year) |
|---|---|---|---|---|---|---|---|
| CN | 105472535 | A | 06 April 2016 | None | | | |
| CN | 103368763 | A | 23 October 2013 | None | | | |
| WO | 2018174635 | A1 | 27 September 2018 | EP | 3509368 | A1 | 10 July 2019 |
| | | | | US | 2019239189 | A1 | 01 August 2019 |
| | | | | KR | 20180121350 | A | 07 November 2018 |
| | | | | CN | 109923914 | A | 21 June 2019 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201811333390